(19) Europäisches Patentamt
European Patent Office
Office européen des brevets

(11) EP 3 629 524 B1

(12) **EUROPEAN PATENT SPECIFICATION**

(45) Date of publication and mention of the grant of the patent:
**05.04.2023 Bulletin 2023/14**

(21) Application number: **18196658.1**

(22) Date of filing: **25.09.2018**

(51) International Patent Classification (IPC):
***H04L 12/40*** *(2006.01)* ***H04L 12/417*** *(2006.01)*
***H04L 12/433*** *(2006.01)*

(52) Cooperative Patent Classification (CPC):
**H04L 12/40; H04L 12/417; H04L 12/433;**
H04L 2012/4026

(54) **METHOD AND NETWORK NODE FOR COMMUNICATING OVER A TOKEN PASSING NETWORK**

VERFAHREN UND NETZWERKKNOTEN ZUR KOMMUNIKATION ÜBER EIN NETZWERK MIT TOKEN-ÜBERGABE

PROCÉDÉ ET NOEUD DE RÉSEAU PERMETTANT DE COMMUNIQUER SUR UN RÉSEAU À PASSAGE DE JETON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.04.2020 Bulletin 2020/14**

(73) Proprietor: **Siemens Schweiz AG**
**8047 Zürich (CH)**

(72) Inventors:
- **Bahr, Michael**
  **81827 München (DE)**
- **Camenzind, Oskar**
  **6422 Steinen (CH)**
- **Weber, Albert**
  **6340 Baar (CH)**

(74) Representative: **Siemens Patent Attorneys**
**Postfach 22 16 34**
**80506 München (DE)**

(56) References cited:
**EP-A1- 2 712 227** **WO-A1-2013/143285**
**US-A- 4 926 418** **US-A1- 2011 255 549**

- **WOLF-BASTIAN PÖTTNER ET AL: "Flow control mechanisms for the bundle protocol in IEEE 802.15.4 low-power networks", CHALLENGED NETWORKS, ACM, 2 PENN PLAZA, SUITE 701 NEW YORK NY 10121-0701 USA, 22 August 2012 (2012-08-22), pages 65-68, XP058009261, DOI: 10.1145/2348616.2348630 ISBN: 978-1-4503-1284-4**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The disclosed embodiments generally relate to a method and a network node for communicating over a token passing network. Specifically, the disclosed embodiments relate to a token passing network formed by a plurality of network nodes and interconnected by a communications media on a Media Access Control or MAC layer.

BACKGROUND

In a world of ever increasing smart devices and smarter technologies, concepts of Internet of Things (IoT) or Web of Things (WoT) propose that everyday objects and devices are to have a network connection, where these objects are enabled to transceive data with other devices, thus forming a network of connected things. Accordingly, a prevalence of communications between devices over communication networks is further increasing.

In order to connect devices and objects general-purpose communication networks are needed that can carry a variety of traffic types. The two extremes are small, deterministic packets having a limited allowed latency with only a few bytes of information on one side, and non-deterministic bursts of several packets with a relaxed latency requirement but with relatively large data volume on the other side.

In the fields of industrial automation and building automation time-critical traffic such as communications for controlling devices has to be transmitted with a deterministic maximum latency. This means that control data packets have to arrive within a certain time. For some control tasks, time critical traffic is also periodic.

On the other side, burst traffic such as IoT communications for transmitting sensor values or larger documents in machinereadable format or the retrieval of webpages occurs. This kind of traffic happens rather sporadically and may include a data volume incurring several packets for completion, which is referred to as packet burst.

A known token passing MAC (Media Access Control) protocol is well-suited to deal with time-critical traffic of single packets. A node can send a packet only if it is in possession of the token thereby eliminating interfering media accesses.

Presently known token passing networks are designed for supporting highly time-critical data traffic with low data volume rather than supporting burst traffic.

US 2011/0255549 A1 discloses a communication management apparatus including: a token-circulation-order-information storing unit that stores token circulation order; a token-frame processing unit that determines whether transmission right acquiring apparatus information of the token frame indicates the own apparatus and transmits a token frame in which first transmission right acquisition determination information indicating a sequence number of a communication apparatus that can acquire a transmission right in the token circulation order, second transmission right acquisition determination information indicating the number of frames that can be transmitted during one token frame circulation, and transmission right acquiring apparatus information indicating the next transmission destination of the token frame after the own apparatus acquired from the token circulation order are set; and a dataframe-communication processing unit that transmits and receives the data frame, thereby to reduce time required until a communication node that acquired the token frame transmits data.

EP 2 712 227 A1 discloses a method for controlling network traffic based on a token ring including: acquiring, by a node that obtains a token, network congestion situation information carried in the token, where the network congestion situation information includes the total number of to-be-retransmitted messages requested by nodes in a current token passing period; comparing, by the node that obtains the token, the total number of to-be-retransmitted messages requested by the nodes in the current token passing period with a congestion threshold; determining, by the node that obtains the token and according to a comparison result, the number of messages that can be transmitted; and transmitting, by the node that obtains the token, messages according to the number of messages that can be transmitted.

WO 2013/143285 A1 discloses a flow control method comprises the steps of: receiving a token by a node in the token-ring, the token-ring comprising at least two nodes; numbering messages to be sent according to information contained in the token, the information being relevant to the messages sent by a node in the token-ring; updating the token according to numbers of the messages to be sent, and transmitting the updated token to the next node in the token-ring; and after sending the updated token to the next node, sequentially sending the numbered messages to each node in the token-ring.

US 4,926,418 discloses a method for transmitting data on a fullduplex buffer insertion ring, wherein access to the ring by each node is regulated by circulating control message around the ring. The message indicated to each node comprises the maximum number of packets that it may transmit during the interval from the reception of one control message to the forwarding of a subsequent control message.

The publication "Flow Control Mechanisms for the Bundle Protocol in IEEE 802.15.4 Low-power Networks" by Wolf-Bastian Pöttner and Lars Wolf explores, how the Bundle Protocol (BP) can be used on top of the IEEE 802.15.4 PHY and MAC layers, while avoiding overhead for additional layers in between.

Accordingly there is a need in the art for dynamically supporting burst traffic in token passing networks while not compromising time-critical traffic, e.g. by blocking a communication medium for a long time.

## SUMMARY

Embodiments for communicating over a token passing network as described herein generally extend the traditional functionality of a token - which is to assign a network node a right to send when it has possession of the token - by a novel functionality of offering and distributing a »budget« amongst the network nodes. According to some embodiments, this budget is specifying a number of packets which the node possessing the token is allowed for sending. The budget is delivered by the token and may be partially or fully used by the network node or not. The embodiments thereby support an unhampered exchange of time-critical traffic while occasionally granting network nodes to utilize the commonly shared budget in order to send burst traffic.

The present invention is defined in the appended independent claims to which reference should be made. Advantageous features are set out in the appended dependent claims. A method is proposed including the steps of:

a) passing a token to each of the plurality of nodes in a predetermined order;
b) enabling each node to send a scheduled number of packets on the network when it has possession of the token;
c) providing at least one token parameter within the token, the at least one token parameter at least specifying a number of packets which the node possessing the token is allowed for sending;
d) determining a maximum number of packets which the node possessing the token is allowed for sending using said at least one token parameter;
e) determining the scheduled number of packets to be scheduled for sending by the node possessing the token, the scheduled number of packets being determined as a subset of an available number of packets currently made available for sending by the node possessing the token, wherein the scheduled number of packets is determined equal to or less than the maximum number of packets determined for the node possessing the token;
f) sending, by the node possessing the token, the scheduled number of packets to the network;
g) replacing at least one of said at least one token parameter within the token by at least one modified token parameter, at least one modified token parameter being at least dependent on the scheduled number of packets sent by the node possessing the token and a number of packets specified by a local parameter which individually specifies a number of packets which a node possessing the token is always allowed for sending; and
h) passing the token to a next node in the predetermined order of the plurality of nodes.

The embodiments according to the invention provide for an effective, yet simple method for transferring unused transmission opportunities in token passing networks to nodes which have to send multiple packets only occasionally. By replacing at least one of said at least one token parameter within the token by at least one modified token parameter, transmission opportunities remaining unused by the node currently possessing the token are delivered as a budget to the next node. An occasional multiplicity of packets to send is often referred to as »burst«. Nodes willing to send a burst receive transmission opportunities by a preceding node in the predetermined order. With the embodiment, unused transmission opportunities are available to the other nodes of the token passing network.

The embodiments according to the invention provide significant improvements compared to known token passing networks with respect to a required time for completing a transmission of bursts or request/reply exchanges on higher layers such as HTTP/TCP (Hypertext Transfer Protocol/Transmission Control Protocol).

The embodiments according to the invention advantageously do not require a synchronized time between the nodes. In fact, the embodiments can be used without any explicit or relative timing. The independence of a global time, a synchronized network time, or other timing requirements makes the embodiments especially suitable for constraint network node devices.

According to an embodiment, the number of packets specified by the token parameter is determined by an integer expressing the number of packets. According to an alternative embodiment, the number of packets specified by the token parameter is determined by a value expressing a time interval for sending said number of packets. Correspondingly, all other relevant parameters such as the maximum number of packets which the node possessing the token is allowed to send are expressed by time values instead of packet counts.

According to an embodiment, a determination of the available number of packets currently made available for sending by the node possessing the token is determined using a defined waiting time interval after reception of the token. Such guard intervals or small processing times between sending packets are advantageous applied in order to allow the processing of the packets according to a protocol supporting such timing.

According to a preferred embodiment, a local parameter locally stored in each of the plurality of nodes is provided. This local parameter specifies a number of packets which a node possessing the token is allowed for sending.

The local parameter is optionally adjusted individually for each node. The maximum number of packets is then determined by the number of packets specified by the token parameter in addition to the number of packets specified by the local parameter. This embodiment has the advantage that the local »budget«, when not used by the current node possessing the token, may be transferred to subsequent nodes.

According to an embodiment, the modified token parameter is a sum of the value of the token parameter and the value of the local parameter deducted by the value of the scheduled number of packets. This modified token parameter is modified by the current node possessing the token and passed to the subsequent token of the plurality of nodes in the predetermined order. Summing the value of the local parameter deducted by the value of the scheduled number of packets to this modified parameter grants for the advantageous effect stated above: in cases where the node has less or no scheduled packets to send, the local parameter will serve as an additional budget for sending packets by subsequent nodes.

According to an embodiment, the value of the local parameter is included in the token as a second token parameter. This embodiment advantageously enables any node to gain knowledge of the local parameter of another node. Since the medium is shared amongst the nodes - note that the ring structure is a logical ring structure within a shared medium, not a physical ring structure - any node is able to listen to the token even though not being the intended recipient to which the token is to be passed.

According to an embodiment, an accumulation or sum of values of the local parameters from nodes preceding the node possessing the token is included in the token as a third parameter. This embodiment is advantageous for deriving a maximum limit for the modified token parameter according to an embodiment described below, particularly including scenarios in which the token passing network is affected by changes due to new nodes or nodes leaving the token passing network.

As will be shown further down below, knowledge of the third parameter transported by the token is advantageous for determining a maximum number of packets which the node possessing the token is allowed for sending. Further on, an adaptation to changing network members is advantageously supported by the third parameter. Applying this embodiment supports the usage of differing local parameter for specifying the number of packets allowed for sending. Differing local parameters for different nodes are advantageous for traffic engineering purposes, for instance, in order to support time-sensitive, periodic, or data-intense traffic flows.

According to an embodiment, a maximum limit for the modified token parameter is included in the token as a fourth parameter. This embodiment is particularly advantageous for adjusting the network traffic in order to grant for a higher threshold for downloads or updates, when latency requirements are currently of lower importance. Such adjustments are advantageously arranged by a network management.

According to an embodiment, the modified token parameter is restricted to an upper value. This measure advantageously supports the object of the invention guaranteeing the time-critical traffic while still allowing for temporary burst traffic. Several factors or combinations thereof can be considered, including the number of nodes in the network, the second token parameter, the third token parameter, the fourth token parameter, and/or a token sequence number assigned to the token.

Specific configurations for special traffic mixes can be made

- by configuring the local parameter locally stored in each of the plurality of nodes, the number of packets to be sent by a node in any case. Nodes with special traffic mixes may get a different, probably larger local parameter.
- by configuring the fourth parameter - i.e. the maximum limit for the modified token parameter - that limits the number of packets to be sent be a single node in a token passing round.
- both, the local parameter and the maximum limit for the modified token parameter can be dynamically configured. This allows the adaptation to dynamically changing traffic mixes and communication requirements.

## DESCRIPTION OF THE DRAWING

The objects as well as further advantages of the present embodiments will become more apparent and readily appreciated from the following description of the preferred embodiments, taken in conjunction with the accompanying drawing in which:

FIG. 1 shows a general format of a token including a Token Transmission Budget field according to an embodiment;

FIG. 2 shows a flowchart representing a token processing routine according to an embodiment;

FIG. 3 shows a token frame format including a Token Transmission Budget field based on a command frame according to the standard IEEE 802.15.4;

FIG. 4 shows a general format of a token including a Token Transmission Budget field and a Maximum Token Transmission Budget field according to an embodiment;

FIG. 5 shows a token frame format including a Token Transmission Budget field and a Maximum Token Transmission Budget field based on a command frame according to the standard IEEE 802.15.4;

FIG. 6 shows a general format of a token including a Token Transmission Budget field and an Accumulated Number of Allowed Packets field according to an embodiment;

FIG. 7 shows a token frame format including a Token Transmission Budget field and an Accumulated Number of Allowed Packets field based on a command frame according to the standard IEEE 802.15.4;

FIG. 8 shows a schematic diagram of an exemplary token passing network;

FIG. 9 shows a first chronological flowchart for a schematic representation of an exchange of control messages and data packets amongst network nodes according to an embodiment;

FIG. 10 shows a second chronological flowchart for a schematic representation of an exchange of control messages and data packets amongst network nodes according to an embodiment;

FIG. 11 shows a third chronological flowchart for a schematic representation of an exchange of control messages and data packets amongst network nodes according to an embodiment;

FIG. 12 shows a fourth chronological flowchart for a schematic representation of an exchange of control messages and data packets amongst network nodes according to an embodiment; and;

FIG. 13 shows a fifth chronological flowchart for a schematic representation of an exchange of control messages and data packets amongst network nodes according to an embodiment.

Like reference signs in the drawing generally represent like parts of exemplary embodiments of the invention.

DETAILED DESCRIPTION

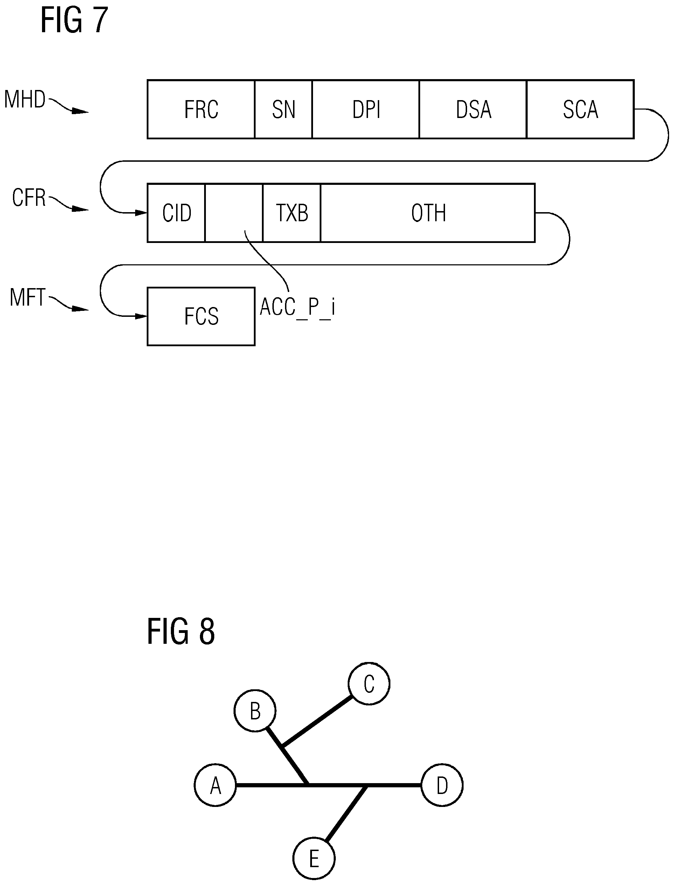

In FIG. 8 a schematic diagram of an exemplary token passing network is depicted. The token passing network includes a shared communications media on a Media Access Control (MAC) layer. Five network nodes A,B,C,D,E are interconnected with each other by the network.

A - not shown - token is passed to each of the five network nodes A,B,C,D,E in a predetermined order, enabling each network node A,B,C,D,E to send a predetermined number of packets on the network when it has possession of the token, thus eliminating interfering media accesses. The transmission of the token in the predetermined order is cyclically repeated, wherein a time span within one cycle - i.e. the time span which the token needs to pass through every network node A,B,C,D,E in the network - is referred to as token round time. A delay time for sending packets is bound by the token round time which includes an associated transmission time of the data packets.

In traditional token passing networks a mechanism is lacking which would dynamically support burst traffic in the token passing network while not compromising the time-critical traffic. This need is even bigger in resource-constraint networks - characterized by a rather low bandwidth and small packet size - which are frequently used in Internet of Things applications. One exemplary communication protocol used for an implementation of such resource-constraint networks is known as 6LoWPAN or »IPv6 over Low-Power Wireless Personal Area Network«

A single TCP packet (Transmission Control Protocol) with a size of 1,500 bytes might be fragmented in 18 packets using this communication protocol 6LoWPAN. A relatively small burst of five IPv6 (Internet Protocol Version 6) packets would then have to be transmitted by a burst of 90 6LoWPAN packets which requires an amount of 90 token round times. Bursts with such an amount of data packets are far beyond reasonable limits in a time-critical traffic network.

A delay caused by such an amount of token round times may subsequently result in timeouts of the TCP acknowledgment mechanism leading to a breakdown of the HTTP/TCP (Hypertext Transfer Protocol/Transmission Control Protocol) communication.

Furthermore, time synchronization between network nodes might fail in resource-constraint networks with embedded and/or resource-constraint devices.

Attempts in the art of supporting burst traffic in a token passing network while not compromising the time-critical traffic have been made. One approach is to configure a network node of a token passing network statically to send multiple packets. Such an attempt is referred to as multiple transmission opportunities. However, there are several drawbacks to this static configuration:

- It reduces the capacity of the network: In order to limit the token round time at the same maximal value, a node that is allowed to send m packets reduces the maximum number of nodes in the network by (m-1);
- It extends the token round time if the number of nodes in the network is the same;
- Since burst traffic is predominantly sporadic, the assigned transmission opportunities are only used rarely;

Another known attempt in the art introduces a concept of a Timed Token Protocol using a Target Token Rotation Time, or TTRT, which is a time interval during which a node is allowed to send packets, a so-called sending dead line. The actual token rotation time is compared to the target token rotation time, or maximum token rotation time, and the difference is the interval for sending messages by the node. Furthermore, there is a strict separation between synchronous and asynchronous traffic. The Timed Token Protocol requires at least several timers at the nodes. Resource-constraint nodes, however, might not have a concept of absolute time and synchronization between them is not possible. Furthermore, embedded devices may have only a very limited number of timers. Moreover, the communication distance between nodes may vary between a few centimeters up to more than 1 kilometer, resulting in a wide range of transmission times.

These known concepts are, therefore, not capable of dynamically supporting burst traffic in token passing networks while not compromising the time-critical traffic in a satisfying manner.

In the following, some embodiments according to the present invention along with their advantages for improving present drawbacks in the art will be described.

Embodiments for communicating over a token passing network as described herein generally extend the traditional functionality of a token - of assigning a network node a right to send when it has possession of the token - by a novel functionality of distributing a »budget« amongst the network nodes by the token. According to some embodiments this budget is specified by a number of packets which the node possessing the token is allowed for sending. The budget is delivered by the token and may be partially or fully used by the network node or not. The embodiments thereby support an unhampered exchange of time-critical traffic while occasionally granting network nodes to utilize the commonly shared budget in order to send burst traffic.

For a compact representation the following terminology is introduced which will be used hereinafter.

**A current node i:**
is a network node i currently in possession of the token.

**Packets:**
are to be understood as data packets at the Token Passing MAC layer.

**Available packets v_i:**
a parameter for specifying a number of packets that are available for sending at the current node while in possession of the token.

**Local allowed packets p_i:**
a parameter for specifying a number of packets which a current node i is always allowed to send according to a parameter locally stored on the current node i.

**Allowed packets w_i:**
a parameter for specifying a number of packets which a current node i is allowed to send.

**Sent packets s_i:**
a parameter for specifying a number of packets sent by current node i.

**Transmission opportunity TXOP:**
The current node is allowed to send a data packet. One transmission opportunity corresponds to being allowed to send one data packet.

In an exemplary token passing network, each node i is allowed to send a certain number of local allowed packets p_i if it is in possession of the token. The number of local allowed packets p_i is usually individually adjusted for each node and stored by a parameter on each node. A usual value for this parameter is 1, meaning that each node is allowed to send one packet.

According to an embodiment, the token is extended by at least one field for providing at least one token parameter within the token. At least one token parameter is specifying a number of packets which the node possessing the token is allowed for sending. This parameter is also referred to as Token Transmission Budget, or TXB. The token Transmission Budget Field contains the number of packets which the node receiving or possessing the token is allowed to send in addition to its local allowed packets p_i. The total amount of allowed packets w_i is therefore a sum of the local allowed packets and the token transmission budget TXB:

$$w_i = p_i + TXB.$$

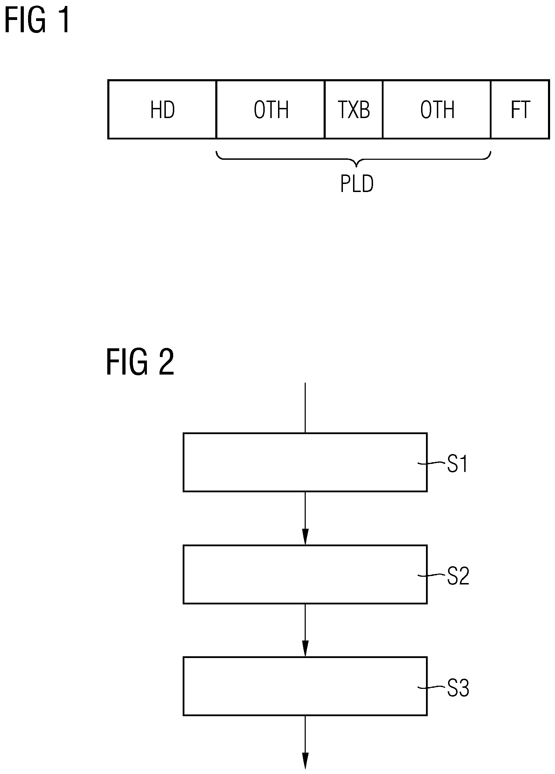

FIG. 1 shows a general format of a token including a Token Transmission Budget field TXB according to an embodiment. A Token Header HD contains addressing information and control information for the correct recognition of the MAC frame as token. The Token Payload PLD contains token-specific information that is distributed between the nodes in the token passing network.

The Token Transmission Budget TXB is part of the token payload PLD. The Token Payload PLD may contain other Token fields OTH with further information. A specific token format can specify any order of the Token fields in the Token Payload.

The preferred size of the Token Transmission Budget TXB field is 1 byte or 1 octet. Other sizes of the Token Transmission Budget TXB field are possible, both smaller and larger. A size of 1 byte/octet allows for a maximum Token Transmission Budget TXB of 255 packets, which is sufficient for the usual maximum size of networks including around 50 nodes.

The Token Footer FT contains fields that are relevant after the reception of the octets of the token. This is usually, for example, a Frame Check Sequence. Alternatively, the Token Footer FT may be empty or the Token Footer FT may be completely omitted.

FIG. 2 shows a flowchart representing a token processing routine according to an embodiment. By a first step S1 a current node interconnected by a communications media on a Media Access Control (MAC) layer is receiving a token including a token parameter stored in a Token Transmission Budget field TXB. After receiving the token, the current node i is allowed to immediately send its allowed packets:

$$w_i = (p_i + TXB)$$

which have to be available at the latest before the node forwards the token to the next node in a predetermined order or token passing order. In other words, the maximum number of packets which the node possessing the token is allowed for sending is a sum of the value of the token parameter TXB and the value of the local parameter p_i.

Immediately sending its allowed packets particularly means that the current node should not wait for packets to become available. The current node is allowed to send packets that have been available when receiving the token, or packets that become available while sending available packets. Optionally, guard intervals or small processing times between sending the packets are applied in order to allow the processing of the packets and according to a protocol supporting such timing.

By a second step S2 the current node i is sending s_i data packets. The number of data packets actually sent by the current node i is determined as sent packets s_i. These sent packets s_i are also referred to as scheduled number of packets s_i - which means packets scheduled for sending - further down below. The number of sent packets s_i is smaller than or equal to (p_i + TXB) depending on how many packets v_i are actually available for sending:

$$(0 \leq s_i \leq (p_i + TXB))$$

with (s_i = v_i) for (v_i ≤ (p_i+TXB)); and;
(s_i = (p_i+TXB)) for (v_i > (p_i+TXB)).

In other words, the scheduled number of packets s_i is determined as a subset of an available number v_i of packets currently made available for sending by the node possessing the token. The given numbers of sent packets s_i stated above are upper limits. Sending less packets than available, even if v_i ≤ (p_i + TXB), is possible.

By a third step S3 the current node i sets the new Token Transmission Budget TXB to a sum of the value of the received token parameter TXB and the value of the local parameter p_i of locally allowed packets, deducted by the sent packets s_i - or synonym: the scheduled number of packets s_i - before forwarding the token to the next node in the token passing order:

$$TXB := TXB + p_i - s_i \quad (1)$$

Especially in networks with event-driven communication, current nodes frequently have no data packets available for sending, when receiving the token. However, each time the local allowed packets p_i would be added on top of token transmission budget TXB, so that token transmission budget would increase to a high value over time. A current node would be able to use this high budget on reception of the token for sending a huge amount of packets in one burst, thereby blocking the communication medium for a long time. This might be too long for time-critical traffic of other nodes, since these other nodes cannot access the communication medium as long as the current node is transmitting its packet burst due to the available high token transmission budget.

In view of this undesired blocking of the communication medium, the token transmission budget TXB is delimited according to an embodiment. Preferably, the Token Transmission Budget TXB is delimited by TXB ≤ sum_j (p_j) - p_(i+1), the sum of all p_j in the network minus the p_j = p_(i+1) of the next node (i+1). Or as formula,

$$TXB_max = sum_j\ (p_j) - p_(i+1) \quad (2)$$

The use of a Maximum Token Transmission Budget TXB_max based on formula (2) ensures that the time of transmission opportunities of a node i is no later than in a full network where each node j sends p_j packets when it is in possession of the token.

Formula (2) requires the knowledge of p_(i+1) at a current node i, especially if the nodes have different p_j. If p_(i+1) is not known at current node i, some sensible value p' for p_(i+1) can be assumed, for instance,

- p' = 1 - very conservative with respect to time
- p' = min(p_j) - conservative with respect to time, less strict if min(p_j) > 1
- p' = max(p_j) - relaxed with respect to time, time of transmission opportunity might be later than in a full network.

In general and for a non-full network with restricting TXB to TXB_max and having a node sending a burst,

- a value of p' < p_(i+1) is conservative with respect to time, the next transmission opportunity will be earlier than in a full network.
- a value of p' = p_(i+1) is exact and provides some opportunistic benefits: the next transmission opportunity will be no later than in a full network, but it might be earlier.
- a value of p' > p_(i+1) is relaxed with respect to time, the next transmission opportunity will be later for some node.

Having the same p_j (or p') at all nodes in the token passing network simplifies formula (2) to:

$$TXB_max = sum_j(p_j) - p_i = (n-1) * p_i \quad (3)$$

If each node in the token passing network is allowed to send one packet per token possession (p_j = 1 for all j), TXB_max is the number of nodes n in the token passing network minus 1.

$$TXB_max = n-1 \quad (4)$$

TXB_max is necessary in order to delimit the time between two subsequent transmission opportunities of any node in the token transmission network. It ensures that a node k in the token passing network can transmit its next data packet after 2 * TXB_max data transmissions (and n-1 token transmissions) at the latest. The resulting formula for the calculation of TXB is then:

$$TXB := min\ (\ (p_i + TXB - s_i)\ ,\ TXB_max\ ) \quad (5)$$

In step S3, the token is forwarded with an amended parameter for the Token Transmission Budget TXB as stated above.

Note, there might be no need for an explicit TXB_max in some implementations. For instance, some protocol stack implementations on constrained devices might only provide a limited number of data packets to be sent during the possession of the token due to memory constraints and program flow constraints. In such a case, the token will be forwarded in due time.

There are many possibilities to specify a format of a token with the token transmission budget TXB or to extend an existing token frame format with the token transmission budget TXB according to the present embodiments.

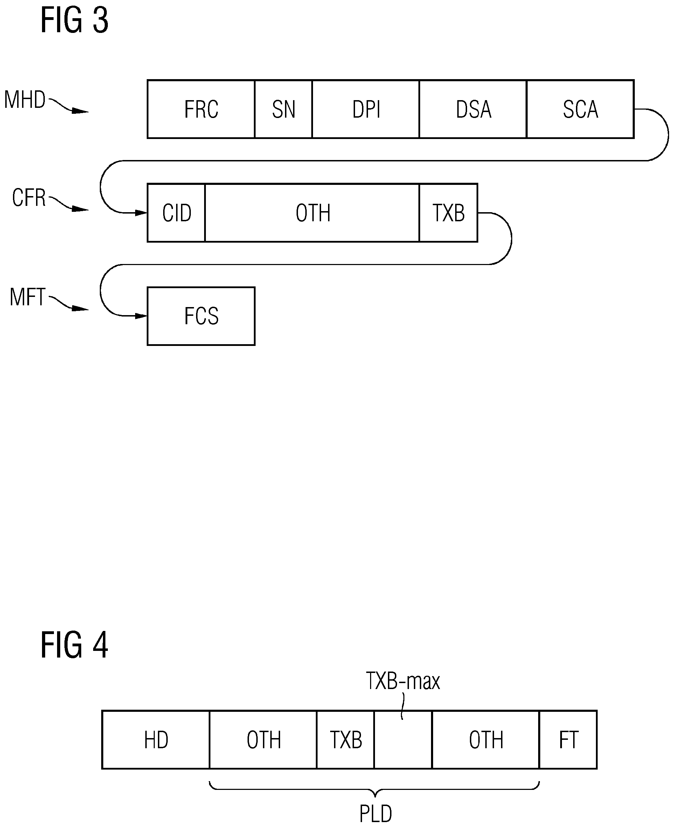

FIG. 3 shows a possible token frame format with token transmission budget TXB based on the frame format and extension mechanisms of an IEEE 802.15.4 command frame. The frame format according to IEEE 802.15.4 can be used in both, wireless and wired, communication networks. Furthermore, there are many possible variants for a token frame format with token transmission budget TXB even on the basis of the IEEE 802.15.4 frame formats.

The IEEE 802.15.4 frame consists of an IEEE 802.15.4 MAC Header MHD, an IEEE 802.15.4 command frame CFR and an IEEE 802.15.4 MAC footer MFT.

The IEEE 802.15.4 MAC Header MHD includes a frame control field FRC which contains a frame type and control information about the presence of the source and destination addresses. The frame type in the current example is set to Command Frame.

The IEEE 802.15.4 MAC Header MHD further includes a sequence number field SN which contains a sequence number over all IEEE 802.15.4 frames generated by a source node. Three further fields, a Destination Personal Area Network Identification Number or PAN ID field DPI, a Destination Address field DSA and a Source Address field SCA within the IEEE 802.15.4 MAC Header MHD contain addressing information of destination node and source node. A Presence of the Destination PAN ID field DPI and the Address fields DSA,SCA is determined by the control information contained in the Frame Control field FRC.

The first field in the payload of an IEEE 802.15.4 command frame CFR is the Command ID field CID. The Command ID identifies the type of a command frame. The Command ID for a token with token transmission budget TXB can be, for instance, chosen to a value of 25 which is the first unused Command ID according to the standard IEEE 802.15.4.

The Command ID field CID is followed by Information fields specific to the given Command type which follow the Command ID field, in this case, one or several Token fields. The Transmission Budget field TXB is one of said Token fields. It can be specified at any position in the Token fields followed, encompassed or preceded by other token fields OTH. In the example of FIG. 3 the Transmission Budget field TXB is positioned to be the last specific field of the Token fields within the IEEE 802.15.4 command frame CFR.

The Transmission Budget field TXB contains the Token Transmission Budget for the node receiving the Token Command frame. The Token Transmission Budget is the number of frames/packets the node possessing the token is allowed to send or allowed to send in addition to a local parameter locally stored in the node possessing the token, which is above referred to as local allowed packets $p_i$.

The size of the Transmission Budget field TXB field is 1 byte or octet. It contains a positive integer value. The size of 1 byte/octet is the preferred size. Other sizes are possible, both smaller and larger. 1 byte/octet allows for a maximum Transmission Budget of 255, which is sufficient for the usual maximum size of networks of around 50 nodes.

In the following, an alternative embodiment is described wherein the Transmission Budget field TXB field contains an actual Token Transmission Budget rather than an additionally allowed Token Transmission Budget as described above for the preferred embodiment.

According to this alternative realization of the Token Transmission Budget field TXB, the actual number of allowed packet transmissions TXB.a at the current node is determined. The above described method will change as follows with this alternative definition of the content of the Token Transmission Budget field TXB. Referring again to FIG. 2, in step S1 according to the alternative embodiment, the current node i, after receiving the token, is allowed to send immediately $w_i = TXB.a$ available packets before it has to forward the token to the next node in the token passing order.

In step S2 according to this alternative embodiment, the number of data packets actually sent by current node i is $s_i$, and $s_i$ is smaller than or equal to TXB.a depending on how many packets $v_i$ are actually available for sending ($0 \le s_i \le TXB.a$)

with ($s_i = v_i$) for ($v_i \le TXB.a$); and;
($s_i = TXB.a$)) for ($v_i > TXB.a$).

By a third step S3 according to the alternative embodiment the current node i sets the token transmission budget to ($p_(i+1)+TXB.a-s_i$) before forwarding the token to the next node in the token passing order.

$$TXB.a := TXB.a - s_i + p_(i+1) \qquad (1a)$$

Preferably, TXB.a is delimited by $TXB.a \le sum_j (p_j)$, the sum of all $p_j$ in the network. Or as formula,

$$TXB.a_max = sum_j\ (p_j) \tag{2a}$$

Formula (1a) requires the knowledge of p_(i+1) at current node i, especially if the nodes have different p_j. Hence, p_(i+1) should be known at current node i in order to provide the correct number of transmission opportunities to node (i+1). Providing a different value p" for p_(i+1), the available transmission opportunities for node (i+1) are not correct and may seriously impact the (real-time) communication of node (i+1). The following lists the consequences for different p" assuming TXB.a = p" , which means that no additional token transmission budget is provided.

- p" = 0: The node (i+1) will not be able to communicate since there is no transmission opportunity (serious problem) ;
- p" < p_(i+1): The node (i+1) has a disadvantage in its share of transmission opportunities, since it has less transmission opportunities then needed (p_(i+1))
- p" > p_(i+1) - node (i+1) has an advantage in its share of transmission opportunities, since it has more transmission opportunities then requested (p_(i+1)). Additional, this will increase the token roundtrip time in a full network above the anticipated value. This might negatively impact real-time traffic of other nodes in the network.

Having the same p_j at all nodes in the token passing network simplifies formula (2a) to:

$$TXB.a_max = sum_j(p_j) = n * p_i. \tag{3a}$$

If each node in the token passing network is allowed to send one packet per token possession (p_j = 1 for all j), TXB.a_max is the number of nodes n in the token passing network.

$$TXB.a_max = n \tag{4a}$$

TXB.a_max is necessary in order to delimit the time between two subsequent transmission opportunities of any node in the token transmission network. The resulting formula for the calculation of TXB.a is then:

$$TXB.a := min\ ((TXB.a - s_i + p_(i+1))\ ,\ TXB.a_max) \tag{5a}$$

In step S3, the token is forwarded with an amended parameter for the actual Token Transmission Budget TXB.a as stated above.

In the following, an alternative embodiment is described wherein an implementation of the delimited Transmission Budget TXB_max does not necessarily require a knowledge of the locally allowed number of packets p_(i+1) - or in other words: transmission opportunities - of a node i+1 following the current node i in the token passing order.

According to the embodiment as described above, the value of the Token Transmission Budget TXB field in the token to be forwarded is delimited by TXB_max, which requires a knowledge of the number of transmission opportunities p_(i+1) of the next node. This knowledge is difficult to obtain, particularly for the case where nodes in the token passing network have differing transmission opportunities.

The alternative embodiment described hereinafter provides a solution for delimiting the Transmission Budget TXB which does not require a knowledge of p_(i+1).

The current node i possessing the token sets the Token Transmission Budget TXB field to the number of excess transmission opportunities w_i - s_i, and the node receiving the token restricts the number of allowed packets to send to TXB_max, which is in this case the sum of all p_j. The method of the invention will change as follows with this alternative of delimiting TXB_max.

Referring again to FIG. 2, in step S1 according to the alternative embodiment, the current node i, after receiving the token, is allowed to send immediately

$$w_i = max((p_i + TXB),\ TXB_max),\ with \tag{1b}$$

$$TXB_max = sum_j\ (p_j) \tag{2b}$$

available packets before it has to forward the token to the next node in the token passing order.

In step S2 according to the alternative embodiment, the number of data packets actually sent by current node i is s_i and s_i is smaller than or equal to w_i depending on how many packets v_i are actually available for sending ( $0 \leq s_i \leq w_i$)

with ($s_i = v_i$) for ($v_i \leq w_i$); and;
($s_i = w_i$) for ($v_i > w_i$) .

The given s_i above are the upper limits. Sending fewer packets than available, even if $v_i \leq w_i$, is possible. This might be used due to some local policies.

By a third step S3 according to the alternative embodiment the current node i sets the token transmission budget to (w_i - s_i) before forwarding the token to the next node in the token passing order.

$$TXB := w_i - s_i = \max((p_i + TXB), TXB_max) - s_i = \max((p_i + TXB), sum_j(p_j)) - s_i \quad (3b)$$

Having the same p_j (or p') at all nodes in the token passing network simplifies formula (2b) to:

$$TXB_max = sum_j(p_j) = n * p_i. \quad (4b)$$

If each node in the token passing network is allowed to send one packet per token possession ($p_j = 1$ for all j), TXB_max is the number of nodes n in the token passing network:

$$TXB_max = n \quad (5b)$$

In the following, an alternative embodiment is described wherein the number of packets specified by parameters is determined by a value expressing a time interval for sending the packets rather than by parameters expressing the number of packets itself.

Instead of specifying the actual number or the additional number of packet transmissions in the Token Transmission Budget field TXB, this alternative embodiment provides a duration or a time interval - time value - as a token transmission budget TXB. Correspondingly, all other relevant parameters such as p_i are time values instead of packet counts. The formulas given above for the computation of the actual transmission budget and TXB_max still apply, but now with time values.

The actual Token Transmission Budget specifies the duration or interval the current node is allowed to send available data packets after receiving the token. »Being allowed to send available data packets« may include the following requirements:

- the beginning of the transmission of the data packet is within the given interval; or;
- the transmission of the data packet needs to be finished within the given interval.

The Token Transmission Budget field TXB when applying this embodiment needs to be large enough in order to accommodate the occurring time values. The network nodes in the network need to be able to handle time durations, time intervals and/or relative timing.

In the following, an embodiment is described wherein a waiting time for making packets available is provided. There might be use cases where data packets are made available not until the receipt of the token. The token triggers the making available of the data packets. In such a case it is preferable to include some waiting time interval after the receipt of the token in order to allow the node to make data packets available that should be send after the receipt of the token.

In the following, an embodiment is described wherein a further token parameter is introduced in addition to the Token Transmission Budget field TXB containing the token parameter specifying the number of packets which the node possessing the token is allowed for sending. This further token parameter is also referred to as fourth token parameter within the description and the claims. The fourth token parameter specifies a Maximum Token Transmission Budget and is included in the token as shown in FIG. 4.

FIG. 4 shows a general format of a token including a Token Transmission Budget field TXB and a Maximum Token Transmission Budget field TXB_max for providing the fourth token parameter within the token according to this embodiment. The structure of this token differs from the token structure shown in FIG. 1 only by an additional field TXB

$_max$. Like reference signs in the drawing represent like parts of exemplary embodiments.

The Maximum Token Transmission Budget field TXB_max is part of the token payload PLD. The Token Payload PLD may contain other Token fields OTH with further information. A specific token format can specify any order of the Token fields in the Token Payload. A Maximum Token Transmission Budget field TXB_max following the Token Transmission Budget field TXB is the preferred order of the two fields TXB, TXB_max.

The preferred size of the Maximum Token Transmission Budget field TXB_max is 1 byte/octet. Other sizes of the Maximum Token Transmission Budget field TXB_max field are possible, both smaller and larger. A size of 1 byte/octet allows for a Maximum Token Transmission Budget TXB_max of 255, which is sufficient for the usual maximum size of networks including around 50 network nodes.

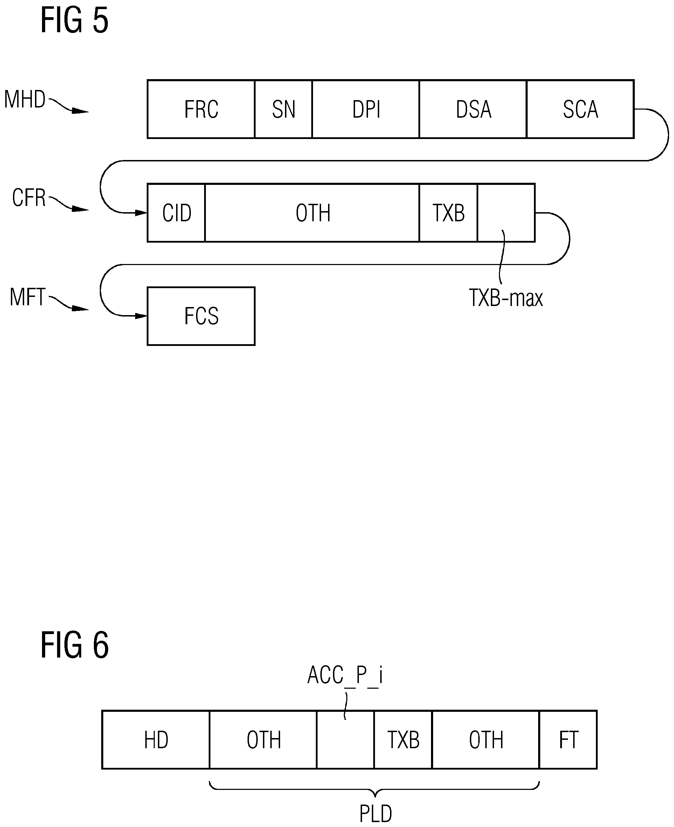

FIG. 5 shows a possible token frame format with token transmission budget TXB and the Maximum Token Transmission Budget TXB_max based on the frame format and extension mechanisms of an IEEE 802.15.4 command frame. Except of the amended token as shown in FIG. 4 within the command frame CFR, the detailed structure of this IEEE 802.15.4 command frame according to FIG. 5 is generally in accordance with the description for FIG. 3.

The Maximum Token Transmission Budget field TXB_max and the Transmission Budget field TXB can be located at any position within the token fields. Neither their order, nor their position next to each other is of any relevance. Their position and and/or order can be chosen arbitrarily. In order to demonstrate the arbitrary design of order and positon of said fields TXB,TXB_max the position of the Transmission Budget field TXB within the command frame CFR shown in FIG.5 has been shifted to the penultimate position in contrast to FIG. 4. Similarly the Maximum Token Transmission Budget field TXB_max within the command frame CFR shown in FIG. 5 has been shifted to the last position in contrast to the Maximum Token Transmission Budget field TXB_max shown in FIG. 4. Of course the position and the orders of the Maximum Token Transmission Budget field TXB_max and the Transmission Budget field TXB have to be consistent with the operational expectations of all nodes exchanging the token within the network.

In the following, an embodiment is described wherein a local parameter locally stored on a node succeeding a current node is received at the current node.

In order to calculate the TXB of the forwarded Token exactly, p_(i+1) has to be known at the current node i. If the network nodes have different p_i, this might not be so easy to achieve. This embodiment provides a method to distribute p_(i+1) to node i. The token is extended by a My Transmission Opportunities field my_TXOP - not shown in the drawing. The My Transmission Opportunities field my_TXOP includes a token parameter specifying the value of the local parameter of a node or, equally, its transmission opportunities. This further token parameter is also referred to as second token parameter within the description and the claims. The My Transmission Opportunities field my_TXOP contains the number of locally allowed packets p_i of the current node i, the source of the token. However, the token with the p_i of source i (current node i) is sent to node (i+1), but the information on p_i of current node i has to be given to node (i-1). (Node i is node (i+1) to node (i-1).) This can be achieved with one of the following methods described from the point of view of a node i that needs p_(i+1):

- Node i listens to control messages exchanged on the shared communication medium after it has forwarded the token to node (i+1). Node i waits for the next token on the shared communication medium. This token is from node (i+1), and node i can extract the my_TXOP value from the token and has its p_(i+1) for its computations of TXB. A missing token transmission by node (i+1) can be detected by a timeout.

- Alternatively, node i listens to control messages exchanged on the shared communication medium after it has forwarded the token to node (i+1). Node i waits for the next token on the shared communication medium. This token contains a source address. Node i can determine whether this token is from node (i+1). If it is from node (i+1), node i can extract the my_TXOP value from the token and has its p_(i+1) for its computations of TXB.

In the following, an embodiment is described wherein a delimited Transmission Budget TXB_max is determined by an accumulated local parameter, which is referred to as ACC_P_i. TXB_max is closely related to sum_j (p_j) for all j indicating a node in the token passing network, the sum of all p_j in the token passing network.

This embodiment provides a method, how the sum_j (p_j) can be determined automatically by every node in the token passing network. According to this embodiment the token contains an additional token field called Accumulated p_i field ACC_P_i.

When receiving the token, the current node adds its local parameter local allowed packets p_i specifying the number of packets which the current node is allowed for sending to the received value of ACC_P_i before forwarding the token. The sum of the p_i is the difference between the values of ACC_P_i of the current and previously received tokens:

$$\text{sum(p_j)} = (\text{ACC_P_i @ t_i}) - (\text{ACC_P_i @ t_(i-1)}) \qquad (1f)$$

A possible integer rollover needs to be taken into account. sum(p_j) can now be used in the calculation of TXB _max in most of the embodiments described above. The most direct use is an embodiment described above in relation to formulas (1b) and (2b) wherein TXB_max is set identically to the sum (p_j).

This embodiment of accumulating the locally allowed packets p_i - or, in other words, the local parameters individually specifying a number of packets which a node possessing the token is allowed for sending - is especially useful in situations, where sum_j (p_j) and therefore the Maximum Token Transmission Budget TXB_max change due to new nodes entering the token passing network or existing nodes leaving the token passing network.

Moreover, this embodiment supports the use of different locally allowed packets p_i at the nodes in the token passing network. Differing locally allowed packets p_i of different nodes might be necessary for traffic engineering purposes, for instance, in order to support time-sensitive, periodic, or data-intense traffic flows.

FIG. 6 shows a general format of a token including a Token Transmission Budget field TXB and an accumulated local parameter field ACC_P_i according to this embodiment. This further token parameter in the accumulated local parameter field ACC_P_i is also referred to as third token parameter within the description and the claims. The third parameter specifies, in other words, an accumulation of values of the local parameter from nodes preceding the node possessing the token in the predetermined order.

The structure of the token shown in FIG. 6 differs from the token structure shown in FIG. 1 only by an additional accumulated local parameter field ACC_P_i. Again, like reference signs in the drawing represent like parts of exemplary embodiments. Of course, the token may additionally include the Maximum Token Transmission Budget TXB_max as shown in FIG. 4.

The accumulated local parameter field ACC_P_i, expressing the accumulated locally allowed packets, is part of the Token Payload PLD. The Token Payload PLD may contain other Token fields OTH with further information. A specific token format can specify any order of the Token fields in the Token Payload. An accumulated local parameter field ACC_P_i preceeding the Token Transmission Budget field TXB is the preferred order of the two fields TXB, ACC_P_i.

The preferred size of the accumulated local parameter field ACC_P_i is 1 byte/octet. Other sizes of the accumulated local parameter field ACC_P_i are possible, both smaller and larger. A size of 1 byte/octet allows for a Maximum Token Transmission Budget TXB_max of 255, which is sufficient for the usual maximum size of networks including around 50 network nodes.

Both token fields TXB, ACC_P_i can be arranged in any order and at any position in the token fields area of the general token frame format. They do not necessarily have to be arranged next to each other.

FIG. 7 shows a possible token frame format including the Transmission Budget field TXB and the Accumulated Local Parameter field ACC_P_i by extension mechanisms of an IEEE 802.15.4 command frame CFR. Except of the amended token as shown in FIG. 6 within the command frame CFR, the detailed structure of this IEEE 802.15.4 command frame according to FIG. 7 is generally in accordance with the description for FIG. 3.

The Accumulated Local Parameter field ACC_P_i and the Transmission Budget field TXB can be located at any position within the token fields. Neither their order, nor their position next to each other is of any relevance. Optionally, their position and/or order can be chosen arbitrarily. In order to demonstrate the arbitrary design of order and positon of said fields ACC_P_i, TXB the position of the Accumulated Local Parameter field ACC_P_i within the command frame CFR shown in FIG. 7 has been shifted to the first position in succession to the Command ID field CID in contrast to FIG. 6. Similarly the Transmission Budget field TXB within the command frame CFR shown in FIG. 7 has been shifted to the second position in contrast to the Transmission Budget field TXB shown in FIG. 6. Of course the positions and the orders of the Accumulated Local Parameter field ACC_P_i and the Transmission Budget field TXB have to be consistent with the operational expectations of all nodes exchanging the token within the network.

If all locally allowed packets p_i are the same and the token contains a token sequence number - not shown in the figures - said token sequence number or TSN can be used for determining Maximum Token Transmission Budget TXB_max, so that the ACC_P_i field is remissible in this case.

The calculation of sum(p_j) is in this case

$$\text{sum_(p_j)} = (\text{TSN@t_i}) - (\text{TSN @t_(i-1)}) * \text{p_i} \quad \text{if p_i} > 1 \qquad (2f)$$

$$\text{sum_(p_j)} = (\text{TSN@t_i}) - (\text{TSN @t_(i-1)}) \quad \text{if p_i} = 1 \qquad (3f)$$

The specific configurations of p_i and TXB_max and their dynamic adaptation, allow configurations where, for instance, all MAClayer fragments of a 6LoWPAN (IPv6) packet with maximum length can be sent within a single token passing round, i.e. within one go after reception of the token. This is the most efficient and fastest way to transmit the 6LoWPAN (IPv6) packet. This is particularly important in token passing networks based on an IEEE 802.15.4 frame format, where a single 6LoWPAN (IPv6) packet may be as large as a burst of 19 fragments.

Hence, the embodiments are particularly suitable to keep delays in higher layer communication such as HTTP/TCP as low as possible. This is all the more important, as HTTP/TCP protocols use timeouts in their communication. Long delays of the transmission of the HTTP/TCP packets in the token passing network would trigger these timeouts and would subsequently make further HTTP/TCP communications impossible.

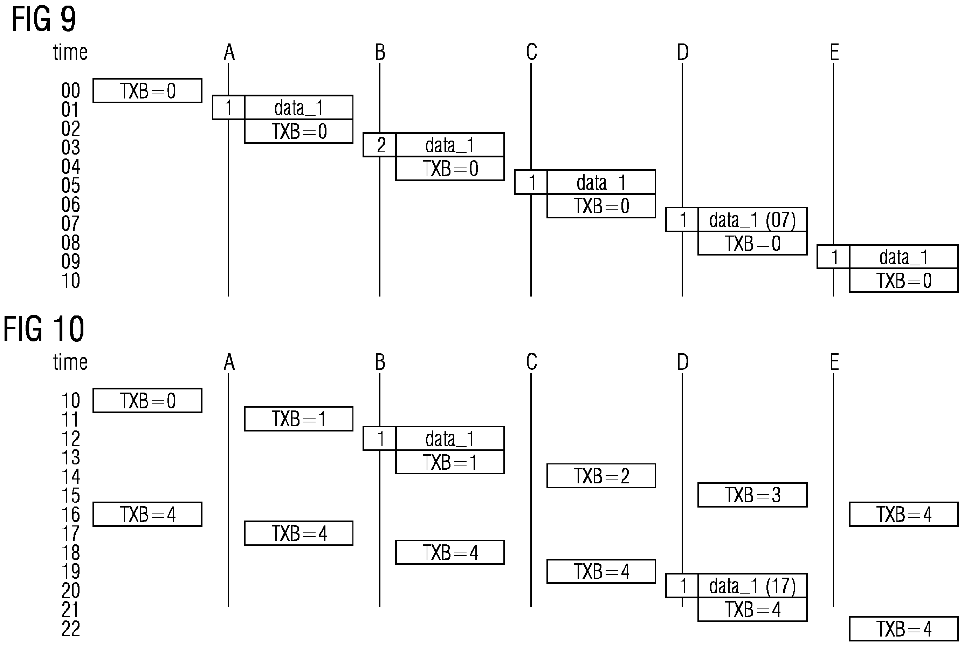

FIG. 9 - 13 show chronological flowcharts for a schematic representation of an exchange of control messages and data packets amongst network nodes. A time line (time) is illustrated at the left side of each FIG. 9 - 13 in which sequential points in time range from a starting time on the top to an end time at the bottom so that later points in time lie further down than earlier points in time. The points in time are accordingly expressed by a two-digit number which is incrementing from top to bottom. For each of the network nodes A,B,C,D,E a respective vertical line is plotted in order to show a message exchange of the respective node in relation to the point in time.

FIG. 9 shows the packet transfers for a token passing round in a full network with $p_i = 1$ for all nodes:

$$TXB_max = (n - 1) * p_i = 4.$$

In this application example node B is assumed to provide a mini burst of two available data packets. Since TXB = 0, node B is allowed to send a single data packet only. The second available data packet has to be sent in the next token passing round, which is described later down below in the description of FIG. 10. If TXB had been larger than zero, node B could have sent its mini burst in the same token passing round.

The following table details the message flow as depicted by FIG. 9 for the full token passing network in the particular points in time:

| time | actions at network node |
|---|---|
| 00 | node A receives token with TXB = 0 |
| | node A computes w_a = p_a + TXB = 1 + 0 = 1 |
| 01 | node A has 1 data packet available |
| | node A sends s_a = 1 data packet (= w_a) |
| | node A has no more data packets available |
| 02 | node A computes new TXB = min ( w_a - s_a, TXB_max) = min ( 1 - 1, 4) = 0 |
| | node A forwards token with TXB = 0 |
| 02 | node B receives token with TXB = 0 |
| | node B computes w_b = p_b + TXB = 1 + 0 = 1 |
| 03 | node B has 2 data packets available |
| | node B sends s_b = 1 data packet (= w_b) |
| | node B has still 1 data packet available |
| 04 | node B computes new TXB = min ( w_b - s_b, TXB_max) = min ( 1 - 1, 4) = 0 |
| | node B forwards token with TXB = 0 |
| 04 | node C receives token with TXB = 0 |
| | node C computes w_c = p_c + TXB = 1 + 0 = 1 |
| 05 | node C has 1 data packet available |
| | node C sends s_c = 1 data packet (= w_c) |
| | node C has no more data packets available |
| 06 | node C computes new TXB = min ( w_c - s_c, TXB_max) = min ( 1 - 1, 4) = 0 |
| | node C forwards token with TXB = 0 |
| 06 | node D receives token with TXB = 0 |
| | node D computes w_d = p_d + TXB = 1 + 0 = 1 |
| 07 | node D has 1 data packet available (made available at time 07) |
| | node D sends s_d = 1 data packet (= w_d) |
| | node D has no more data packets available |
| 08 | node D computes new TXB = min ( w_d - s_d, TXB_max) = min ( 1 - 1, 4) = 0 |
| | node D forwards token with TXB = 0 |
| 08 | node E receives token with TXB = 0 |
| | node E computes w_e = p_e + TXB = 1 + 0 = 1 |
| 09 | node E has 1 data packet available |

(continued)

| time | actions at network node |
|---|---|
| | node E sends s_e = 1 data packet (= w_e) |
| | node E has no more data packets available |
| 10 | node E computes new TXB = min ( w_e - s_e, TXB_max) = min ( 1 - 1, 4) = 0 |
| | node E forwards token with TXB = 0 |

In a following application example according to FIG. 10, network node D is assumed to send period traffic every tenth time step (time step 7, 17, and so on) that has to be sent within the next 9 time steps (by time step 16, 26, and so on). The other nodes A, B, C, and E do not have data packets to send. FIG. 10 shows the corresponding packet flow.

In FIG. 9 (full network), the packet is made available and sent at time 07 (no delay for waiting for a transmission opportunity). In FIG. 10 (almost empty network), the packet is made available at the same relative time (time 17) but it is only sent at a relatively later time (time 20, delay for waiting for a transmission opportunity of 3 time steps).

On first sight, this behavior looks disadvantageously. However, this is simply caused by the time a packet is made available. The relevant limit is the delay for waiting for the next transmission opportunity in a full token passing network when the packet is made available right after a transmission opportunity. In our example, a data packet would be made available at node D at time 08 in FIG. 9. The method of the embodiments will never be worse than this limit.

The following table details the message flow as depicted by FIG. 10.

| time | actions at network node |
|---|---|
| 10 | node A receives token with TXB = 0 |
| | node A computes w_a = p_a + TXB = 1 + 0 = 1 |
| 11 | node A has no data packet available |
| | node A sends s_a = 0 data packet (< w_a = 1) |
| | node A has no data packets available |
| | node A computes new TXB = min ( w_a - s_a, TXB_max) = min ( 1 - 0, 4) = 1 |
| | node A forwards token with TXB = 1 |
| 11 | node B receives token with TXB = 1 |
| | node B computes w_b = p_b + TXB = 1 + 1 = 2 |
| 12 | node B has 1 data packet available |
| | node B sends s_b = 1 data packet (< w_b = 2) |
| | node B has no more data packets available |
| 13 | node B computes new TXB = min ( w_b - s_b, TXB_max) = min ( 2 - 1, 4) = 1 |
| | node B forwards token with TXB = 1 |
| 13 | node C receives token with TXB = 1 |
| | node C computes w_c = p_c + TXB = 1 + 1 = 2 |
| 14 | node C has no data packet available |
| | node C sends s_c = 0 data packets (< w_c = 2) |
| | node C has no data packets available |
| | node C computes new TXB = min ( w_c - s_c, TXB_max) = min ( 2 - 0, 4) = 2 |
| | node C forwards token with TXB = 2 |
| 14 | node D receives token with TXB = 2 |
| | node D computes w_d = p_d + TXB = 1 + 2 = 3 |
| 15 | node D has no data packet available (next will be made available at time 17) |
| | node D sends s_d = 0 data packets (< w_d = 3) |
| | node D has no data packets available |
| | node D computes new TXB = min ( w_d - s_d, TXB_max) = min ( 3 - 0, 4) = 3 |
| | node D forwards token with TXB = 3 |
| 15 | node E receives token with TXB = 3 |
| | node E computes w_e = p_e + TXB = 1 + 3 = 4 |
| 16 | node E has no data packet available |
| | node E sends s_e = 0 data packets (< w_e = 4) |
| | node E has no data packets available |
| | node E computes new TXB = min ( w_e - s_e), TXB_max) = min ( 4 - 0, 4) = 4 |

(continued)

| | |
|---|---|
| | node E forwards token with TXB = 4 |
| 16 | node A receives token with TXB = 4 |
| | node A computes w_a = p_a + TXB = 1 + 4 = 5 |
| 17 | node A has no data packet available |
| | node A sends s_a = 0 data packet (< w_a = 5) |
| | node A has no data packets available |
| | node A computes new TXB = min ( w_a - s_a, TXB_max) = min ( 5 - 0, 4) = 4 |
| | node A forwards token with TXB = 4 (limited by TXB_max) |
| 17 | node B receives token with TXB = 4 |
| | node B computes w_b = p_b + TXB = 1 + 4 = 5 |
| 18 | node B has no data packet available |
| | node B sends s_b = 0 data packet (< w_b = 5) |
| | node B has no data packets available |
| | node B computes new TXB = min ( w_b - s_b, TXB_max) = min ( 5 - 0, 4) = 4 |
| | node B forwards token with TXB = 4 (limited by TXB_max) |
| 18 | node C receives token with TXB = 4 |
| | node C computes w_c = p_c + TXB = 1 + 4 = 5 |
| 19 | node C has no data packet available |
| | node C sends s_c = 0 data packet (< w_c = 5) |
| | node C has no data packets available |
| | node C computes new TXB = min ( w_c - s_c, TXB_max) = min ( 5 - 0, 4) = 4 |
| | node C forwards token with TXB = 4 (limited by TXB_max) |
| 19 | node D receives token with TXB = 4 |
| | node D computes w_d = p_d + TXB = 1 + 4 = 5 |
| 20 | node D has 1 data packet available (made available at time 17) |
| | node D sends s_d = 1 data packet (< w_d = 5) |
| | node D has no more data packets available |
| 21 | node D computes new TXB = min ( w_d - s_d, TXB_max) = min ( 5 - 1, 4) = 4 |
| | node D forwards token with TXB = 4 |
| 21 | node E receives token with TXB = 4 |
| | node E computes w_e = p_e + TXB = 1 + 4 = 5 |
| 22 | node E has no data packet available |
| | node E sends s_e = 0 data packet (< w_e = 5) |
| | node E has no data packets available |
| | node E computes new TXB = min ( w_e - s_e, TXB_max) = min ( 5 - 0, 4) = 4 |
| | node E forwards token with TXB = 4 (limited by TXB_max) |

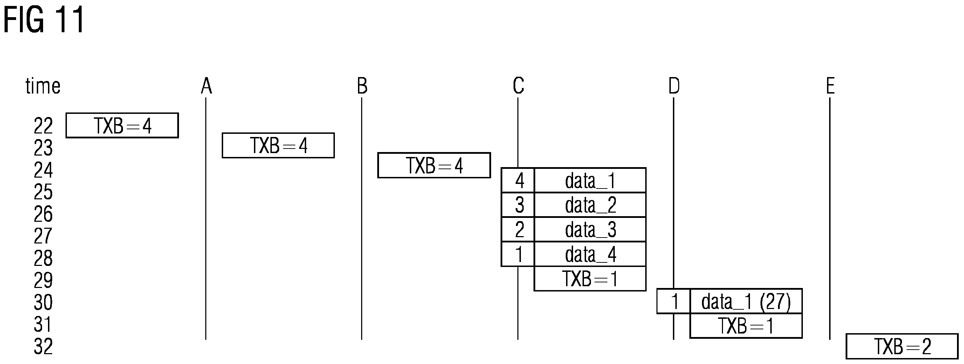

FIG. 11 shows a different situation in the example token passing network. Node D is continuously sending a regular data packet at relative times 7. Additionally, node C wants to send a burst of 4 data packets.

The example in FIG. 11 shows the packet flow for a burst of four packets in an almost empty token passing network. The advantages of the present embodiments are even more apparent in almost empty token passing networks. In FIG. 11, the token transmission budget is at its maximum when node C receives the token. In this case, node C can transmit the 4 available data packets in a single burst. For TXB values smaller than 3, node C would need more than a single token passing round in order to send its burst of 4 data packets. For TXB > 0, the method according the present embodiments provides a benefit for node C. For TXB = 0, the method according the present embodiments corresponds to the token passing of the state of the art.

The following table details the message flow as depicted by FIG. 11.

| time | actions at network node |
|---|---|
| 22 | node A receives token with TXB = 4 |
| | node A computes w_a = p_a + TXB = 1 + 4 = 5 |
| 23 | node A has no data packet available |

(continued)

| | |
|---|---|
| | node A sends s_a = 0 data packet (< w_a = 5) |
| | node A has no data packets available |
| | node A computes new TXB = min ( w_a - s_a, TXB_max) = min ( 5 - 0, 4) = 4 |
| | node A forwards token with TXB = 4 (limited by TXB_max) |
| 23 | node B receives token with TXB = 4 |
| | node B computes w_b = p_b + TXB = 1 + 4 = 5 |
| 24 | node B has no data packet available |
| | node B sends s_b = 0 data packet (< w_b = 5) |
| | node B has no data packets available |
| | node B computes new TXB = min ( w_b - s_b, TXB_max) = min ( 5 - 0, 4) = 4 |
| | node B forwards token with TXB = 4 (limited by TXB_max) |
| 24 | node C receives token with TXB = 4 |
| | node C computes w_c = p_c + TXB = 1 + 4 = 5 |
| 25-28 | node C has 4 data packets available |
| | node C sends s_c = 4 data packets (< w_c = 5) |
| | node C has no more data packets available |
| 29 | node C computes new TXB = min ( w_c - s_c, TXB_max) = min ( 5 - 4, 4) = 1 |
| | node C forwards token with TXB = 1 |
| 29 | node D receives token with TXB = 1 |
| | node D computes w_d = p_d + TXB = 1 + 1 = 2 |
| 30 | node D has 1 data packet available (made available at time 27) |
| | node D sends s_d = 1 data packet (< w_d = 2) |
| | node D has no more data packets available |
| 31 | node D computes new TXB = min ( w_d - s_d, TXB_max) = min ( 2 - 1, 4) = 1 |
| | node D forwards token with TXB = 1 |
| 31 | node E receives token with TXB = 1 |
| | node E computes w_e = p_e + TXB = 1 + 1 = 2 |
| 32 | node E has no data packet available |
| | node E sends s_e = 0 data packets (< w_e = 2) |
| | node E has no data packets available |
| | node E computes new TXB = min ( w_e - s_e), TXB_max) = min ( 2 - 0, 4) = 2 |
| | node E forwards token with TXB = 2 |

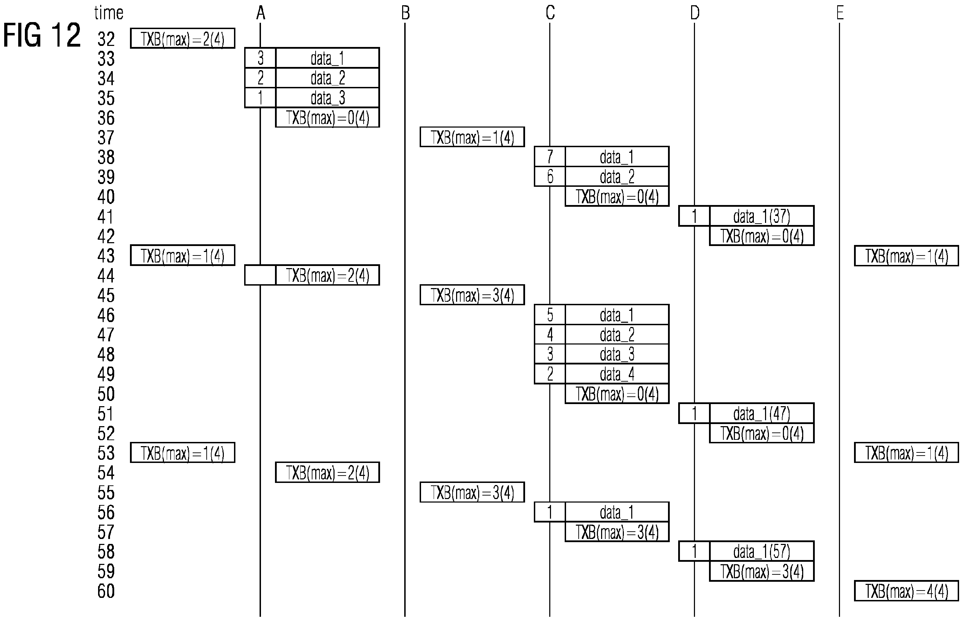

FIG. 12 shows an example packet flow for a token passing network making use of a dynamic configuration of TXB_max according to an embodiment described above. It is assumed that node A sends a small HTTP or CoAP request - exemplarily comprising an amount of three packets - for some web document such as the device configuration to node C. Node C sends the requested web document as reply which is exemplarily comprising an amount of seven packets. Node D continues to send its regular packet at relative times 7.

Applying a method according to the present embodiments, the request-reply exchange between nodes A and C needs 26 time steps - including received and forwarded tokens - from time 32 to time 57. In contrast, applying a method according to the state of the art, such an exchange would have last for 59 time steps, from time 32 to time 90. In this example, the method according to the present embodiments provides an improvement of 33 time steps which is a remarkable improvement of 56 percent.

The following table details the message flow as depicted by FIG. 12.

| time | actions at network node |
|---|---|
| 32 | node A receives token with TXB = 2, TXB_max = 4 |
| | node A computes w_a = p_a + TXB = 1 + 2 = 3 |
| 33-35 | node A has 3 data packet available (small HTTP or CoAP request to node C for web document (device configuration)) |
| | node A sends s_a = 3 data packet (= w_a = 3) |
| | node A has no more data packets available |

(continued)

| time | actions at network node |
|---|---|
| 36 | node A computes new TXB = min ( w_a - s_a, TXB_max) = min ( 3 - 3, 4) = 0 |
| | node A sets TXB_max to the received TXB_max = 4 |
| | node A forwards token with TXB = 0, TXB_max = 4 |
| 36 | node B receives token with TXB = 0, TXB_max = 4 |
| | node B computes w_b = p_b + TXB = 1 + 0 = 1 |
| 37 | node B has no data packet available |
| | node B sends s_b = 0 data packet (< w_b = 1) |
| | node B has no data packets available |
| | node B computes new TXB = min ( w_b - s_b, TXB_max) = min ( 1 - 0, 4) = 1 |
| | node B sets TXB_max to the received TXB_max = 4 |
| | node B forwards token with TXB = 1, TXB_max = 4 |
| 37 | node C receives token with TXB = 1, TXB_max = 4 |
| | node C computes w_c = p_c + TXB = 1 + 1 = 2 |
| 38-39 | node C has 7 data packets available |
| | node C sends s_c = 2 data packets (= w_c = 2) (limited by w_c) |
| | node C has 5 more data packets available |
| 40 | node C computes new TXB = min ( w_c - s_c, TXB_max) = min (2 - 2, 4) = 0 |
| | node C sets TXB_max to the received TXB_max = 4 |
| | node C forwards token with TXB = 0, TXB_max = 4 |
| 40 | node D receives token with TXB = 0, TXB_max = 4 |
| | node D computes w_d = p_d + TXB = 1 + 0 = 1 |
| 41 | node D has 1 data packet available (made available at time 37) |
| | node D sends s_d = 1 data packet (= w_d = 1) |
| | node D has no more data packets available |
| 42 | node D computes new TXB = min ( w_d - s_d, TXB_max) = min (1 - 1, 4) = 0 |
| | node D sets TXB_max to the received TXB_max = 4 |
| | node D forwards token with TXB = 0, TXB_max = 4 |
| 42 | node E receives token with TXB = 0, TXB_max = 4 |
| | node E computes w_e = p_e + TXB = 1 + 0 = 1 |
| 43 | node E has no data packet available |
| | node E sends s_e = 0 data packets (< w_e = 1) |
| | node E has no data packets available |
| | node E computes new TXB = min ( w_e - s_e), TXB_max) = min (1 - 0, 4) = 1 |
| | node E sets TXB_max to the received TXB_max = 4 |
| | node E forwards token with TXB = 1, TXB_max = 4 |
| 43 | node A receives token with TXB = 1, TXB_max = 4 |
| | node A computes w_a = p_a + TXB = 1 + 1 = 2 |
| 44 | node A has no data packet available |
| | node A sends s_a = 0 data packets (< w_a = 2) |
| | node A has no data packets available |
| | node A computes new TXB = min ( w_e - s_e), TXB_max) = min (2 - 0, 4) = 2 |
| | node A sets TXB_max to the received TXB_max = 4 |
| | node A forwards token with TXB = 2, TXB_max = 4 |
| 44 | node B receives token with TXB = 2, TXB_max = 4 |
| | node B computes w_b = p_b + TXB = 1 + 2 = 3 |
| 45 | node B has no data packet available |
| | node B sends s_b = 0 data packet (< w_b = 3) |
| | node B has no data packets available |
| | node B computes new TXB = min ( w_b - s_b, TXB_max) = min (3 - 0, 4) = 3 |
| | node B sets TXB_max to the received TXB_max = 4 |

(continued)

| time | actions at network node |
|---|---|
| | node B forwards token with TXB = 3, TXB_max = 4 |
| 45 | node C receives token with TXB = 3, TXB_max = 4 |
| | node C computes w_c = p_c + TXB = 1 + 3 = 4 |
| 46-49 | node C has 5 data packets available |
| | node C sends s_c = 4 data packets (= w_c = 4) (limited by w_c) |
| | node C has 1 more data packet available |
| 50 | node C computes new TXB = min ( w_c - s_c, TXB_max) = min (4 - 4, 4) = 0 |
| | node C sets TXB_max to the received TXB_max = 4 |
| | node C forwards token with TXB = 0, TXB_max = 4 |
| 50 | node D receives token with TXB = 0, TXB_max = 4 |
| | node D computes w_d = p_d + TXB = 1 + 0 = 1 |
| 51 | node D has 1 data packet available (made available at time 47) |
| | node D sends s_d = 1 data packet (= w_d = 1) |
| | node D has no more data packets available |
| 52 | node D computes new TXB = min ( w_d - s_d, TXB_max) = min (1 - 1, 4) = 0 |
| | node D sets TXB_max to the received TXB_max = 4 |
| | node D forwards token with TXB = 0, TXB_max = 4 |
| 52 | node E receives token with TXB = 0, TXB_max = 4 |
| | node E computes w_e = p_e + TXB = 1 + 0 = 1 |
| 53 | node E has no data packet available |
| | node E sends s_e = 0 data packets (< w _e = 1) |
| | node E has no data packets available |
| | node E computes new TXB = min ( w_e - s_e), TXB_max) = min (1 - 0, 4) = 1 |
| | node E sets TXB_max to the received TXB_max = 4 |
| | node E forwards token with TXB = 1, TXB_max = 4 |
| 53 | node A receives token with TXB = 1, TXB_max = 4 |
| | node A computes w_a = p_a + TXB = 1 + 1 = 2 |
| 54 | node A has no data packet available |
| | node A sends s_a = 0 data packets (< w_a = 2) |
| | node A has no data packets available |
| | node A computes new TXB = min ( w_e - s_e), TXB_max) = min (2 - 0, 4) = 2 |
| | node A sets TXB_max to the received TXB_max = 4 |
| | node A forwards token with TXB = 2, TXB_max = 4 |
| 54 | node B receives token with TXB = 2, TXB_max = 4 |
| | node B computes w_b = p_b + TXB = 1 + 2 = 3 |
| 55 | node B has no data packet available |
| | node B sends s_b = 0 data packet (< w_b = 3) |
| | node B has no data packets available |
| | node B computes new TXB = min ( w_b - s_b, TXB_max) = min (3 - 0, 4) = 3 |
| | node B sets TXB_max to the received TXB_max = 4 |
| | node B forwards token with TXB = 3, TXB_max = 4 |
| 55 | node C receives token with TXB = 3, TXB_max = 4 |
| | node C computes w_c = p_c + TXB = 1 + 3 = 4 |
| 56 | node C has 1 data packet available |
| | node C sends s_c = 1 data packets (< w_c = 4) |
| | node C has no more data packet available |
| 57 | node C computes new TXB = min ( w_c - s_c, TXB_max) = min (4 - 1, 4) = 3 |
| | node C sets TXB_max to the received TXB_max = 4 |
| | node C forwards token with TXB = 3, TXB_max = 4 |
| 57 | node D receives token with TXB = 3, TXB_max = 4 |

(continued)

| time | actions at network node |
|---|---|
| | node D computes w_d = p_d + TXB = 1 + 3 = 4 |
| 58 | node D has 1 data packet available (made available at time 57) |
| | node D sends s_d = 1 data packet (< w_d = 4) |
| | node D has no more data packets available |
| 59 | node D computes new TXB = min (w_d - s_d, TXB_max) = min (4 - 1, 4) = 3 |
| | node D sets TXB_max to the received TXB_max = 4 |
| | node D forwards token with TXB = 3, TXB_max = 4 |
| 59 | node E receives token with TXB = 3, TXB_max = 4 |
| | node E computes w_e = p_e + TXB = 1 + 3 = 4 |
| 60 | node E has no data packet available |
| | node E sends s_e = 0 data packets (< w_e = 4) |
| | node E has no data packets available |
| | node E computes new TXB = min ( w_e - s_e), TXB_max) = min (4 - 0, 4) = 4 |
| | node E sets TXB_max to the received TXB_max = 4 |
| | node E forwards token with TXB = 4, TXB_max = 4 |

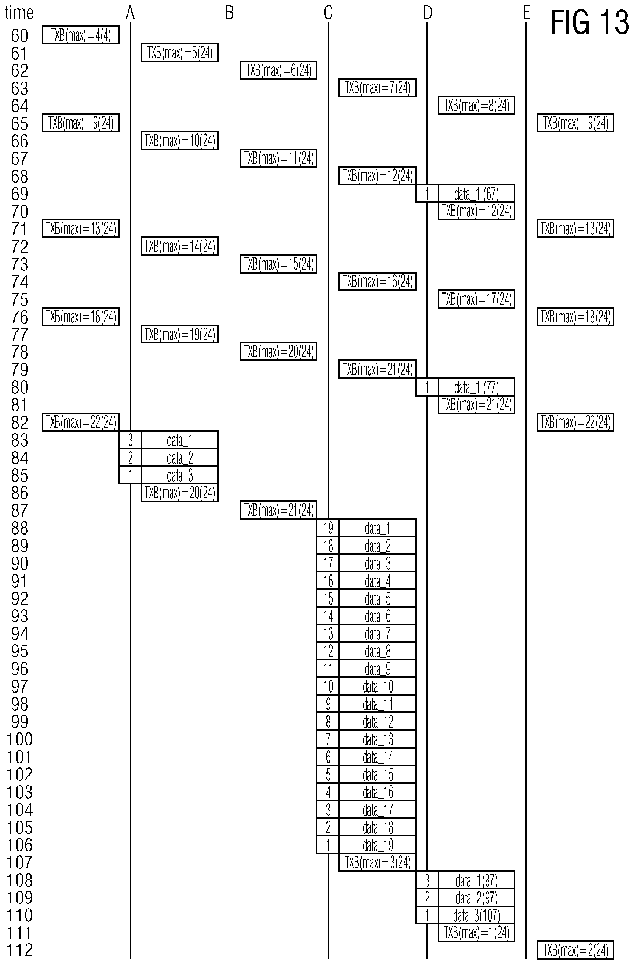

Turning now to a flowchart depicted by FIG. 13, wherein a scenario of a token passing network is assumed which is located in an office building wherein offices are unstaffed at night. A building management downloads logfiles and performs software updates automatically when necessary during night hours. Time-sensitive communications might have relaxed latency requirements while offices are unstaffed. This is the case for the time-sensitive communication of node D.

In order to have efficient data communication for downloading logfiles and performing software updates, the building management reconfigures the TXB_max value of the example token passing network in order to achieve a higher threshold. The building management accordingly allows nodes to send five times more data packets than in normal daily operation after receiving the token. TXB_max is increased from 4 (TXB_max=4 + p_i=1 = 5 packets to be sent) to 24 (TXB_max=24 + p_i=1 = 25 packets to be sent).

In the example, this increase of TXB_max is achieved by instructing node A to set TXB_max to the new value of 24 once in the token to be forwarded.

FIG.13 shows the example packet flow making use of a dynamic configuration of TXB_max according to an embodiment described above including an amended - or specifically substantially increased - TXB_max. Again, node A sends a small HTTP or CoAP request (three packets in the example) for some web document such as a logfile to node C.

Node C sends the requested web document as reply (19 packets in the example). Node D continues to send its regular packet at times 7, but with relaxed latency requirements (5 times longer latency is tolerated = 45 time steps).

The following table details the message flow as depicted by FIG. 13.

| time | actions at network node |
|---|---|
| 60 | node A receives token with TXB = 4, TXB_max = 4 |
| | node A computes w_a = p_a + TXB = 1 + 4 = 5 |
| 61 | node A has no data packet available |
| | node A sends s_a = 0 data packets (< w_a = 5) |
| | node A has no data packets available |
| | node A reconfigures TXB_max to 24 as instructed |
| | node A computes new TXB = min (w_e - s_e), TXB_max) = min (5 - 0, 24) = 5 |
| | node A sets TXB_max to the reconfigured value TXB_max = 24 |
| | node A forwards token with TXB = 5, TXB_max = 24 |
| 61 | node B receives token with TXB = 5, TXB_max = 24 |
| | node B computes w_b = p_b + TXB = 1 + 5 = 6 |
| 62 | node B has no data packet available |
| | node B sends s_b = 0 data packet (< w_b = 6) |

(continued)

| time | actions at network node |
|---|---|
| | node B has no data packets available |
| | node B computes new TXB = min (w_b - s_b, TXB_max) = min (6 - 0, 24) = 6 |
| | node B sets TXB_max to the received TXB_max = 24 |
| | node B forwards token with TXB = 6, TXB_max = 24 |
| 62-82 | nodes C, D, E, A, B receive tokens with TXB = txb, TXB_max = 24 |
| | nodes C, D, E, A, B compute w_n = p_n + TXB = 1 + txb = (txb+1) |
| | nodes C, D, E, A, B have no data packets available (except node D in times 69, 80) |
| | nodes C, D, E, A, B send s_n = 0 data packets (< w_n = (txb+1)) |
| | nodes C, D, E, A, B have no data packets available |
| | nodes C, D, E, A, B compute new TXB = min ( w_n - s_n, TXB_max) = min ( w_n - 0, 24) = w_n |
| | nodes C, D, E, A, B set TXB_max to the received TXB_max = 24 |
| 69, 80 | node D has 1 data packet available (made available at times 67, 77) |
| | node D sends s_d = 1 data packet (< w_d = {13; 22}) |
| | node D has no more data packets available |
| 70, 81 | node D computes new TXB = min ( w_d - s_d, TXB_max) = min ({13; 22} - 1, 24) = {12; 21} |
| | node D sets TXB_max to the received TXB_max = 24 |
| | node D forwards token with TXB = {12;21}, TXB_max = 24 |
| 82 | node A receives token with TXB = 22, TXB_max = 24 |
| | node A computes w_a = p_a + TXB = 1 + 22 = 23 |
| 83-85 | node A has 3 data packets available (small HTTP or CoAP request to node C for web document (log file)) |
| | node A sends s_a = 3 data packets (< w_a = 23) |
| | node A has no more data packets available |
| 86 | node A computes new TXB = min ( w_a - s_a, TXB_max) = min (23 - 3, 24) = 20 |
| | node A sets TXB_max to the received TXB_max = 24 |
| | node A forwards token with TXB = 20, TXB_max = 24 |
| 86 | node B receives token with TXB = 20, TXB_max = 24 |
| | node B computes w_b = p_b + TXB = 1 + 20 = 21 |
| 87 | node B has no data packet available |
| | node B sends s_b = 0 data packets (< w_b = 21) |
| | node B has no data packets available |
| | node B computes new TXB = min ( w_b - s_b, TXB_max) = min ( 21 - 0, 24) = 21 |
| | node B sets TXB_max to the received TXB_max = 24 |
| | node B forwards token with TXB = 21, TXB_max = 24 |
| 87 | node C receives token with TXB = 21, TXB_max = 24 |
| | node C computes w_c = p_c + TXB = 1 + 21 = 22 |
| 88-106 | node C has 19 data packets available (web document (log file)) |
| | node C sends s_c = 19 data packets (< w_c = 22) |
| | node C has no more data packets available |

(continued)

| time | actions at network node |
|---|---|
| 107 | node C computes new TXB = min ( w_c - s_c, TXB_max) = min (22 - 19, 24) = 3 |
| | node C sets TXB_max to the received TXB_max = 24 |
| | node C forwards token with TXB = 3, TXB_max = 24 |
| 107 | node D receives token with TXB = 3, TXB_max = 24 |
| | node D computes w_d = p_d + TXB = 1 + 2 = 4 |
| 108-110 | node D has 3 data packets available (made available at times 87, 97, 107) |
| | node D sends s_d = 3 data packets (< w_d = 4) |
| | node D has no more data packets available |
| 111 | node D computes new TXB = min ( w_d - s_d, TXB_max) = min (4 - 3, 24) = 1 |
| | node D sets TXB_max to the received TXB_max = 24 |
| | node D forwards token with TXB = 1, TXB_max = 24 |
| 111 | node E receives token with TXB = 1, TXB_max = 24 |
| | node E computes w_e = p_e + TXB = 1 + 1 = 2 |
| 112 | node E has no data packet available |
| | node E sends s_e = 0 data packets (< w_e = 2) |
| | node E has no data packets available |
| | node E computes new TXB = min ( w_e - s_e), TXB_max) = min (2 - 0, 24) = 2 |
| | node E sets TXB_max to the received TXB_max = 24 |
| | node E forwards token with TXB = 2, TXB_max = 24 |

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

**1.** A method for communicating over a token passing network formed by a plurality of network nodes (A - E) interconnected by a communications media on a Media Access Control (MAC) layer, the method including the steps of:

a) passing a token to each of the plurality of nodes (A - E) in a predetermined order;
b) enabling each node (A - E) to send a scheduled number of packets on the network when it has possession of the token;
c) providing at least one token parameter (TXB) within the token, the at least one token parameter (TXB) at least specifying a number of packets (w_i) which the node (A - E) possessing the token is allowed for sending;
d) determining a maximum number of packets (s_i) which the node (A - E) possessing the token is allowed for sending using said at least one token parameter (TXB);
e) determining the scheduled number of packets (s_i) to be scheduled for sending by the node (A - E) possessing the token, the scheduled number of packets (s_i) being determined as a subset of an available number of packets (v_i) currently made available for sending by the node (A - E) possessing the token, wherein the scheduled number of packets (s_i) is determined equal to or less than the maximum number of packets (w_i) determined for the node (A - E) possessing the token;
f) sending, by the node (A - E) possessing the token, the scheduled number of packets (s_i) to the network;
g) replacing at least one of said at least one token parameter (TXB) within the token by at least one modified token parameter (TXB), at least one modified token parameter (TXB) being at least dependent on the scheduled number of packets ($s_i$) sent by the node (A - E) possessing the token and a number of packets ($p_i$) specified by a local parameter which individually specifies a number of packets which a node (A - E) possessing the token is always allowed for sending; and

h) passing the token to a next node (A - E) in the predetermined order of the plurality of nodes (A - E).

**2.** The method according to claim 1, wherein the number of packets specified by the token parameter (TXB) is determined by an integer expressing the number of packets.

**3.** The method according to claim 1, wherein the number of packets specified by the token parameter (TXB) is determined by a value expressing a time interval for sending said number of packets.

**4.** The method according to one of the aforementioned claims, wherein a determination of the available number of packets ($v_i$) currently made available for sending by the node (A - E) possessing the token uses a defined waiting time interval after reception of the token.

**5.** The method according to one of the aforementioned claims, including the step of providing the local parameter locally stored in each of the plurality of nodes (A - E), the local parameter individually specifying a number of packets ($p_i$) which a node (A - E) possessing the token is allowed for sending, wherein the maximum number of packets is determined by the number of packets specified by the token parameter (TXB) in addition to the number of packets ($p_i$) specified by the local parameter.

**6.** The method according to claim 5, wherein at least one of the modified token parameters (TXB) is a sum of the value of the token parameter (TXB) and the value ($p_i$) of the local parameter deducted by the value of the scheduled number of packets ($s_i$).

**7.** The method according to one of the aforementioned claims 5 and 6, providing a second token parameter within the token, the second token parameter specifying the value ($p_i$) of the local parameter.

**8.** The method according to one of the aforementioned claims 5-7, providing a third token parameter within the token, the third token parameter specifying an accumulation of values ($ACC_P_i$) of the local parameter from nodes (A - E) preceding the node (A - E) possessing the token in the predetermined order.

**9.** The method according to one of the aforementioned claims 5-8, providing a fourth token parameter within the token, the fourth token parameter specifying a maximum limit ($TXB_{max}$) for the modified token parameter (TXB).

**10.** The method according to claim 9, wherein the modified token parameter (TXB) is restricted to an upper value depending on

- the number of nodes (A - E) in the network;
- the second token parameter;
- the third token parameter;
- the fourth token parameter; and/or
- a token sequence number assigned to the token.

**11.** The method according to one of the aforementioned claims, wherein the token is embedded in a control frame of a control message on the Media Access Control, MAC, layer.

**12.** The method according to claim 11, wherein the token has a format according to the standard IEEE 802.15.4.

**13.** A network node (A - E) in a token passing network formed by a plurality of such network nodes (A - E) interconnected by a communications media on a Media Access Control, MAC, layer, the combination comprising

- at least one processor; and
- a non-transitory computer-readable storage medium storing instructions for:

a) passing a token to each of the plurality of nodes (A - E) in a predetermined order;

b) enabling each node (A - E) to send a scheduled number of packets on the network when it has possession of the token;

c) providing at least one token parameter (TXB) within the token, the at least one token parameter (TXB) at least specifying a number of packets (w_i) which the node (A - E) possessing the token is allowed for sending;

d) determining a maximum number of packets (s_i) which the node (A - E) possessing the token is allowed for sending using said at least one token parameter (TXB);

e) determining the scheduled number of packets (s_i) to be scheduled for sending by the node (A - E) possessing the token, the scheduled number of packets (s_i) being determined as a subset of an available number of packets (v_i) currently made available for sending by the node (A - E) possessing the token, wherein the scheduled number of packets (s_i) is determined equal to or less than the maximum number of packets (w_i) determined for the node (A - E) possessing the token;

f) sending, by the node (A - E) possessing the token, the scheduled number of packets (s_i) to the network;

g) replacing at least one of said at least one token parameter (TXB) within the token by at least one modified token parameter (TXB), at least one modified token parameter (TXB) being at least dependent on the scheduled number of packets (s_i) sent by the node (A - E) possessing the token and a number of packets (p_i) specified by a local parameter which individually specifies a number of packets which a node (A - E) possessing the token is always allowed for sending; and;

h) passing the token to a next node (A - E) in the predetermined order of the plurality of nodes (A - E).

**14.** The network node (A - E) according to claim 13, the non-transitory computer-readable storage medium storing instructions for executing a method according to one of the aforementioned claims 1-12.

**Patentansprüche**

**1.** Verfahren zum Kommunizieren über ein Token-Weitergabe-Netzwerk, das von mehreren Netzwerkknoten (A - E) gebildet wird, die über Kommunikationsmedien in einer Media-Access-Control-Schicht (MAC-Schicht) miteinander verbunden sind, wobei das Verfahren folgende Schritte umfasst:

a) Weitergeben eines Tokens an jeden der mehreren Knoten (A - E) in einer vorgegebenen Reihenfolge,

b) Befähigen jedes Knotens (A - E), eine vorgesehene Anzahl Pakete in dem Netzwerk zu senden, wenn er das Token besitzt,

c) Bereitstellen mindestens eines Token-Parameters (TXB) in dem Token, wobei der mindestens eine Token-Parameter (TXB) zumindest eine Anzahl Pakete (w_i) angibt, die der Knoten (A - E), der das Token besitzt, senden darf,

d) Bestimmen einer maximalen Anzahl Pakete (s_i), die der Knoten (A - E), der das Token besitzt, senden darf, mithilfe des mindestens einen Token-Parameters (TXB),

e) Bestimmen der vorgesehenen Anzahl Pakete (s_i), die zum Senden durch den Knoten (A - E), der das Token besitzt, vorgesehen werden sollen, wobei die vorgesehene Anzahl Pakete (s_i) als Teilmenge einer verfügbaren Anzahl Pakete (v_i) bestimmt wird, die derzeit zum Senden durch den Knoten (A - E), der das Token besitzt, zur Verfügung stehen, wobei bestimmt wird, dass die vorgesehene Anzahl Pakete (s_i) höchstens der maximalen Anzahl Pakete (w_i) entspricht, die für den Knoten (A - E), der das Token besitzt, bestimmt sind,

f) Senden der vorgesehenen Anzahl Pakete (s_i) durch den Knoten (A - E), der das Token besitzt, zum Netzwerk,

g) Ersetzen mindestens eines des mindestens einen Token-Parameters (TXB) in dem Token durch mindestens einen modifizierten Token-Parameter (TXB), wobei mindestens ein modifizierter Token-Parameter (TXB) zumindest von der vorgesehenen Anzahl Pakete (s_i), die von dem Knoten (A - E), der das Token besitzt, gesendet werden, und einer Anzahl Pakete (p_i) abhängig ist, die von einem lokalen Parameter angegeben wird, der eine Anzahl Pakete einzeln angibt, die ein Knoten (A - E), der das Token besitzt, jederzeit senden darf, und

h) Weitergeben des Tokens an einen nächsten Knoten (A - E) in der vorgegebenen Reihenfolge der mehreren Knoten (A - E).

**2.** Verfahren nach Anspruch 1, wobei die von dem Token-Parameter (TXB) angegebene Anzahl Pakete durch eine Ganzzahl bestimmt wird, die für die Anzahl Pakete steht.

**3.** Verfahren nach Anspruch 1, wobei die von dem Token-Parameter (TXB) angegebene Anzahl Pakete durch einen Wert bestimmt wird, der für einen Zeitraum zum Senden der Anzahl Pakete steht.

**4.** Verfahren nach einem der vorhergehenden Ansprüche, wobei bei einer Bestimmung der verfügbaren Anzahl Pakete (v_i), die derzeit zum Senden durch den Knoten (A - E), der das Token besitzt, zur Verfügung stehen, ein definierter Wartezeitraum nach dem Empfang des Tokens benutzt wird.

**5.** Verfahren nach einem der vorhergehenden Ansprüche, das das Bereitstellen des vor Ort in jedem der mehreren Knoten (A - E) gespeicherten lokalen Parameters umfasst, wobei der lokale Parameter einzeln eine Anzahl Pakete (p_i) angibt, die ein Knoten (A - E), der das Token besitzt, senden darf, wobei die maximale Anzahl Pakete von der Anzahl Pakete bestimmt wird, die zusätzlich zu der von dem lokalen Parameter angegebenen Anzahl Pakete (p_i) von dem Token-Parameter (TXB) angegeben wird.

**6.** Verfahren nach Anspruch 5, wobei es sich bei mindestens einem der modifizierten Token-Parameter (TXB) um eine Summe des Werts des Token-Parameters (TXB) und des Werts (p_i) des lokalen Parameters minus den Wert der vorgesehenen Anzahl Pakete (s_i) handelt.

**7.** Verfahren nach einem der vorhergehenden Ansprüche 5 und 6, das in dem Token einen zweiten Token-Parameter bereitstellt, der den Wert (p_i) des lokalen Parameters angibt.

**8.** Verfahren nach einem der vorhergehenden Ansprüche 5-7, das in dem Token einen dritten Token-Parameter bereitstellt, der eine Ansammlung von Werten (ACC_P_i) des lokalen Parameters aus den dem Knoten (A - E), der das Token besitzt, in der vorgegebenen Reihenfolge vorangehenden Knoten (A - E) angibt.

**9.** Verfahren nach einem der vorhergehenden Ansprüche 5-8, das in dem Token einen vierten Token-Parameter bereitstellt, der einen maximalen Grenzwert (TXB_max) für den modifizierten Token-Parameter (TXB) angibt.

**10.** Verfahren nach Anspruch 9, wobei der modifizierte Token-Parameter (TXB) auf einen oberen Wert beschränkt ist, und zwar in Abhängigkeit von

- der Anzahl Knoten (A - E) im Netzwerk,
- dem zweiten Token-Parameter,
- dem dritten Token-Parameter,
- dem vierten Token-Parameter und/oder
- einer dem Token zugewiesenen Token-Sequenznummer.

**11.** Verfahren nach einem der vorhergehenden Ansprüche, wobei das Token in einen Steuer-Frame einer Steuernachricht in der Media-Access-Control-Schicht (MAC-Schicht) eingebettet wird.

**12.** Verfahren nach Anspruch 11, wobei das Token ein der Norm IEEE 802.15.4 entsprechendes Format aufweist.

**13.** Netzwerkknoten (A - E) in einem Token-Weitergabe-Netzwerk, das von mehreren derartigen Netzwerkknoten (A - E) gebildet wird, die über Kommunikationsmedien in einer Media-Access-Control-Schicht (MAC-Schicht) miteinander verbunden sind, wobei die Kombination Folgendes umfasst:

- mindestens einen Prozessor und
- ein nichtflüchtiges, computerlesbares Speichermedium, das Anweisungen für Folgendes speichert:

  a) Weitergeben eines Tokens an jeden der mehreren Knoten (A - E) in einer vorgegebenen Reihenfolge,
  b) Befähigen jedes Knotens (A - E), eine vorgesehene Anzahl Pakete in dem Netzwerk zu senden, wenn er das Token besitzt,
  c) Bereitstellen mindestens eines Token-Parameters (TXB) in dem Token, wobei der mindestens eine Token-Parameter (TXB) zumindest eine Anzahl Pakete (w_i) angibt, die der Knoten (A - E), der das Token besitzt, senden darf,
  d) Bestimmen einer maximalen Anzahl Pakete (s_i), die der Knoten (A - E), der das Token besitzt, senden darf, mithilfe des mindestens einen Token-Parameters (TXB),
  e) Bestimmen der vorgesehenen Anzahl Pakete (s_i), die zum Senden durch den Knoten (A - E), der das Token besitzt, vorgesehen werden sollen, wobei die vorgesehene Anzahl Pakete (s_i) als Teilmenge einer verfügbaren Anzahl Pakete (v_i) bestimmt wird, die derzeit zum Senden durch den Knoten (A - E), der das Token besitzt, zur Verfügung stehen, wobei bestimmt wird, dass die vorgesehene Anzahl Pakete (s_i) höchstens der maximalen Anzahl Pakete (w_i) entspricht, die für den Knoten (A - E), der das Token besitzt, bestimmt sind,

f) Senden der vorgesehenen Anzahl Pakete (s_i) durch den Knoten (A - E), der das Token besitzt, zum Netzwerk,

g) Ersetzen mindestens eines des mindestens einen Token-Parameters (TXB) in dem Token durch mindestens einen modifizierten Token-Parameter (TXB), wobei mindestens ein modifizierter Token-Parameter (TXB) zumindest von der vorgesehenen Anzahl Pakete (s_i), die von dem Knoten (A - E), der das Token besitzt, gesendet werden, und einer Anzahl Pakete (p_i) abhängig ist, die von einem lokalen Parameter angegeben wird, der eine Anzahl Pakete einzeln angibt, die ein Knoten (A - E), der das Token besitzt, jederzeit senden darf, und

h) Weitergeben des Tokens an einen nächsten Knoten (A - E) in der vorgegebenen Reihenfolge der mehreren Knoten (A - E).

**14.** Netzwerkknoten (A - E) nach Anspruch 13, wobei das nichtflüchtige, computerlesbare Speichermedium Anweisungen für das Ausführen eines Verfahrens nach einem der vorhergehenden Ansprüche 1-12 speichert.

## Revendications

**1.** Procédé pour communiquer sur un réseau à passage de jeton formé par une pluralité de noeuds de réseau (A-E) interconnectés par un support de communication sur une couche de commande d'accès au support (MAC), le procédé comprenant les étapes consistant à :

a) passer un jeton à chacun de la pluralité de noeuds (A-E) dans un ordre prédéterminé ;

b) permettre à chaque noeud (A-E) d'envoyer un nombre planifié de paquets sur le réseau lorsqu'il est en possession du jeton ;

c) fournir au moins un paramètre de jeton (TXB) au sein du jeton, l'au moins un paramètre de jeton (TXB) spécifiant au moins un nombre de paquets (w_i) que le noeud (A-E) possédant le jeton est autorisé à envoyer ;

d) déterminer un nombre maximum de paquets (s_i) que le noeud (A-E) possédant le jeton est autorisé à envoyer à l'aide dudit au moins un paramètre de jeton (TXB) ;

e) déterminer le nombre planifié de paquets (s_i) à planifier pour un envoi par le noeud (A-E) possédant le jeton, le nombre planifié de paquets (s_i) étant déterminé en tant que sous-ensemble d'un nombre disponible de paquets (v_i) actuellement rendus disponibles pour un envoi par le noeud (A-E) possédant le jeton, dans lequel le nombre planifié de paquets (s_i) est déterminé comme étant inférieur ou égal au nombre maximum de paquets (w_i) déterminé pour le noeud (A-E) possédant le jeton ;

f) envoyer, par le noeud (A-E) possédant le jeton, le nombre planifié de paquets (s_i) au réseau ;

g) remplacer au moins un dudit au moins un paramètre de jeton (TXB) au sein du jeton par au moins un paramètre de jeton modifié (TXB), au moins un paramètre de jeton modifié (TXB) étant au moins dépendant du nombre planifié de paquets (s_i) envoyés par le noeud (A-E) possédant le jeton et un nombre de paquets (p_i) spécifié par un paramètre local qui spécifie individuellement un nombre de paquets qu'un noeud (A-E) possédant le jeton est toujours autorisé à envoyer ; et

h) passer le jeton à un noeud (A-E) suivant dans l'ordre prédéterminé de la pluralité de noeuds (A-E).

**2.** Procédé selon la revendication 1, dans lequel le nombre de paquets spécifié par le paramètre de jeton (TXB) est déterminé par un nombre entier exprimant le nombre de paquets.

**3.** Procédé selon la revendication 1, dans lequel le nombre de paquets spécifié par le paramètre de jeton (TXB) est déterminé par une valeur exprimant un intervalle de temps pour envoyer ledit nombre de paquets.

**4.** Procédé selon l'une des revendications précédentes, dans lequel une détermination du nombre disponible de paquets (v_i) actuellement rendus disponibles pour un envoi par le noeud (A-E) possédant le jeton utilise un intervalle de temps d'attente défini après la réception du jeton.

**5.** Procédé selon l'une des revendications précédentes, comprenant l'étape consistant à fournir le paramètre local stocké localement dans chacun de la pluralité de noeuds (A-E), le paramètre local spécifiant individuellement un nombre de paquets (p_i) qu'un noeud (A-E) possédant le jeton est autorisé à envoyer, dans lequel le nombre maximum de paquets est déterminé par le nombre de paquets spécifié par le paramètre de jeton (TXB) en plus du nombre de paquets (p_i) spécifié par le paramètre local.

**6.** Procédé selon la revendication 5, dans lequel au moins un des paramètres de jeton modifiés (TXB) est une somme de la valeur du paramètre de jeton (TXB) et de la valeur (p_i) du paramètre local déduite par la valeur du nombre planifié de paquets (s_i).

**7.** Procédé selon l'une des revendications précédentes 5 et 6, fournissant un deuxième paramètre de jeton au sein du jeton, le deuxième paramètre de jeton spécifiant la valeur (p_i) du paramètre local.

**8.** Procédé selon l'une des revendications précédentes 5 à 7, fournissant un troisième paramètre de jeton au sein du jeton, le troisième paramètre de jeton spécifiant une accumulation de valeurs (ACC_P_i) du paramètre local à partir de noeuds (A-E) précédant le noeud (A-E) possédant le jeton dans l'ordre prédéterminé.

**9.** Procédé selon l'une des revendications précédentes 5 à 8, fournissant un quatrième paramètre de jeton au sein du jeton, le quatrième paramètre de jeton spécifiant une limite maximum (TXB_max) pour le paramètre de jeton modifié (TXB).

**10.** Procédé selon la revendication 9, dans lequel le paramètre de jeton modifié (TXB) est restreint à une valeur supérieure en fonction

- du nombre de noeuds (A-E) dans le réseau ;
- du deuxième paramètre de jeton ;
- du troisième paramètre de jeton ;
- du quatrième paramètre de jeton ; et/ou
- d'un numéro de séquence de jeton attribué au jeton.

**11.** Procédé selon l'une des revendications précédentes, dans lequel le jeton est incorporé dans une trame de commande d'un message de commande sur la couche de commande d'accès au support, MAC.

**12.** Procédé selon la revendication 11, dans lequel le jeton a un format selon la norme IEEE 802.15.4.

**13.** Noeud de réseau (A-E) dans un réseau à passage de jeton formé par une pluralité de tels noeuds de réseau (A-E) interconnectés par un support de communication sur une couche de commande d'accès au support, MAC, la combinaison comprenant

- au moins un processeur ; et
- un support de stockage non transitoire lisible par ordinateur stockant des instructions pour :

  a) passer un jeton à chacun de la pluralité de noeuds (A-E) dans un ordre prédéterminé ;
  b) permettre à chaque noeud (A-E) d'envoyer un nombre spécifié de paquets sur le réseau lorsqu'il est en possession du jeton ;
  c) fournir au moins un paramètre de jeton (TXB) au sein du jeton, l'au moins un paramètre de jeton (TXB) spécifiant au moins un nombre de paquets (w_i) que le noeud (A-E) possédant le jeton est autorisé à envoyer ;
  d) déterminer un nombre maximum de paquets (s_i) que le noeud (A-E) possédant le jeton est autorisé à envoyer à l'aide dudit au moins un paramètre de jeton (TXB) ;
  e) déterminer le nombre planifié de paquets (s_i) à planifier pour un envoi par le noeud (A-E) possédant le jeton, le nombre spécifié de paquets (s_i) étant déterminé en tant que sous-ensemble d'un nombre disponible de paquets (v_i) actuellement rendus disponibles pour un envoi par le noeud (A-E) possédant le jeton, dans lequel le nombre planifié de paquets (s_i) est déterminé comme étant inférieur ou égal au nombre maximum de paquets (w_i) déterminé pour le noeud (A-E) possédant le jeton ;
  f) envoyer, par le noeud (A-E) possédant le jeton, le nombre planifié de paquets (s_i) au réseau ;
  g) remplacer au moins un dudit au moins un paramètre de jeton (TXB) au sein du jeton par au moins un paramètre de jeton modifié (TXB), au moins un paramètre de jeton modifié (TXB) étant au moins dépendant du nombre planifié de paquets (s_i) envoyés par le noeud (A-E) possédant le jeton et un nombre de paquets (p_i) spécifié par un paramètre local qui spécifie individuellement un nombre de paquets qu'un noeud (A-E) possédant le jeton est autorisé à envoyer ; et ;
  h) passer le jeton à un noeud (A-E) suivant dans l'ordre prédéterminé de la pluralité de noeuds (A-E).

**14.** Noeud de réseau (A-E) selon la revendication 13, le support de stockage non transitoire lisible par ordinateur stockant des instructions pour exécuter un procédé selon l'une des revendications précédentes 1 à 12.

FIG 1

HD
OTH
TXB
OTH
FT
PLD

FIG 2

S1

S2

S3

FIG 3

MHD
FRC
SN
DPI
DSA
SCA
CFR
CID
OTH
TXB
MFT
FCS

FIG 4

TXB-max
HD
OTH
TXB
OTH
FT
PLD

FIG 5

MHD
FRC
SN
DPI
DSA
SCA
CFR
CID
OTH
TXB
MFT
FCS
TXB-max

FIG 6

ACC_P_i

| HD | OTH | | TXB | OTH | FT |
|---|---|---|---|---|---|

PLD

FIG 7

MHD
FRC
SN
DPI
DSA
SCA
CFR
CID
TXB
OTH
MFT
FCS
ACC_P_i

FIG 8

C
B
A
D
E

FIG 9
time
A
B
C
D
E
00
01
02
03
04
05
06
07
08
09
10
TXB=0
1
data_1
TXB=0
2
data_1
TXB=0
1
data_1
TXB=0
1
data_1 (07)
TXB=0
1
data_1
TXB=0
FIG 10
time
A
B
C
D
E
10
11
12
13
14
15
16
17
18
19
20
21
22
TXB=0
TXB=1
1
data_1
TXB=1
TXB=2
TXB=3
TXB=4
TXB=4
TXB=4
TXB=4
TXB=4
1
data_1 (17)
TXB=4
TXB=4

FIG 11

time
22
23
24
25
26
27
28
29
30
31
32
A
B
C
D
E
TXB=4
TXB=4
TXB=4
4
3
2
1
data_1
data_2
data_3
data_4
TXB=1
1
data_1 (27)
TXB=1
TXB=2

FIG 12
time
A
B
C
D
E
32 33 34 35 36 37 38 39 40 41 42 43 44 45 46 47 48 49 50 51 52 53 54 55 56 57 58 59 60
TXB(max)=2(4)
3 data_1
2 data_2
1 data_3
TXB(max)=0(4)
TXB(max)=1(4)
7 data_1
6 data_2
TXB(max)=0(4)
1 data_1(37)
TXB(max)=0(4)
TXB(max)=1(4)
TXB(max)=2(4)
TXB(max)=1(4)
TXB(max)=3(4)
5 data_1
4 data_2
3 data_3
2 data_4
TXB(max)=0(4)
1 data_1(47)
TXB(max)=0(4)
TXB(max)=1(4)
TXB(max)=1(4)
TXB(max)=2(4)
TXB(max)=3(4)
1 data_1
TXB(max)=3(4)
1 data_1(57)
TXB(max)=3(4)
TXB(max)=4(4)

FIG 13
time
A
B
C
D
E
60
61
62
63
64
65
66
67
68
69
70
71
72
73
74
75
76
77
78
79
80
81
82
83
84
85
86
87
88
89
90
91
92
93
94
95
96
97
98
99
100
101
102
103
104
105
106
107
108
109
110
111
112
TXB(max)=4(4)
TXB(max)=5(24)
TXB(max)=6(24)
TXB(max)=7(24)
TXB(max)=8(24)
TXB(max)=9(24)
TXB(max)=9(24)
TXB(max)=10(24)
TXB(max)=11(24)
TXB(max)=12(24)
1
data_1 (67)
TXB(max)=12(24)
TXB(max)=13(24)
TXB(max)=13(24)
TXB(max)=14(24)
TXB(max)=15(24)
TXB(max)=16(24)
TXB(max)=17(24)
TXB(max)=18(24)
TXB(max)=18(24)
TXB(max)=19(24)
TXB(max)=20(24)
TXB(max)=21(24)
1
data_1 (77)
TXB(max)=21(24)
TXB(max)=22(24)
TXB(max)=22(24)
3
data_1
2
data_2
1
data_3
TXB(max)=20(24)
TXB(max)=21(24)
19
data_1
18
data_2
17
data_3
16
data_4
15
data_5
14
data_6
13
data_7
12
data_8
11
data_9
10
data_10
9
data_11
8
data_12
7
data_13
6
data_14
5
data_15
4
data_16
3
data_17
2
data_18
1
data_19
TXB(max)=3(24)
3
data_1(87)
2
data_2(97)
1
data_3(107)
TXB(max)=1(24)
TXB(max)=2(24)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20110255549 A1
- EP 2712227 A1
- WO 2013143285 A1
- US 4926418 A


### Non-patent literature cited in the description


- **WOLF-BASTIAN PÖTTNER ; LARS WOLF.** *Flow Control Mechanisms for the Bundle Protocol in IEEE 802.15.4 Low-power Networks*